# EUROPEAN PATENT APPLICATION

(11) **EP 4 604 523 A1**
(43) Date of publication of application: **20.08.2025**
(21) Application number: 22961762.6
(22) Date of filing: 13.10.2022
(51) Int. Cl.: H04N 19/117

(54) **ENCODING AND DECODING METHODS, ENCODER, DECODER, CODE STREAM, AND STORAGE MEDIUM**

(71) Applicant: GUANGDONG OPPO MOBILE TELECOMMUNICATIONS CORP., LTD., Dongguan, Guangdong 523860 (CN)
(72) Inventor: XIE, Zhihuang, Dongguan, Guangdong 523860 (CN)
(74) Representative: Grassi, Stefano
(86) International application number: PCT/CN2022/125224
(87) International publication number: WO 2024/077573

(57) **Abstract**

Embodiments of the present application disclose encoding and decoding methods, an encoder, a decoder, a code stream, and a storage medium. The decoding method comprises: parsing a code stream, and determining first syntax element identification information of a component to be filtered of a current frame or current slice, wherein the first syntax element identification information is used for determining whether a component to be filtered of each block of the current frame or current slice is filtered by using a preset network model; when the first syntax element identification information indicates that there is a component to be filtered of a division block in the current frame or current slice to be allowed to be filtered by using the preset network model, determining quantization parameter information of said component, and determining second syntax element identification information; and on the basis of the second syntax element identification information, the quantization parameter information and the preset network model, filtering the current block of the current frame or current slice to obtain a filtered reconstruction value of said component of the current block.

## Description

### TECHNICAL FIELD

Embodiments of the disclosure relate to the technical field of image processing, and in particular to encoding and decoding methods, an encoder, a decoder, a bitstream, and a storage medium.

### BACKGROUND

In video encoding and decoding systems, most video encoding adopts a block-based hybrid coding framework. Each frame in a video is partitioned into several coding tree units (CTUs), and a coding tree unit may be further partitioned into several rectangular coding units (CUs). These CUs may be either rectangular blocks or square blocks. Since different encoding parameters are used for neighbouring CUs, such as different transform processes, different quantization parameters (QPs), different prediction manners, different reference pictures, etc., errors introduced by CUs have independent sizes and distribution characteristics, and discontinuities at boundaries of neighbouring CUs lead to blocking artifacts, thereby affecting both the subjective and objective quality of a reconstructed picture, and even affecting a prediction accuracy of subsequent encoding and decoding.

In this way, during the encoding and decoding process, an in-loop filter is used to improve the subjective and objective quality of the reconstructed picture. In-loop filtering methods based on neural networks exhibit superior encoding performance. In the related art, for different test conditions and quantization parameters, a simplified and low-complexity preset network model may be used alone for the in-loop filtering. When using a low-complexity preset network model for filtering, quantization parameter information is added as an additional input, that is, the quantization parameter information is used as the input of the network to improve a generalization ability of the preset neural network model, thereby achieving good encoding performance without switching between the preset network models.

However, when using the low-complexity preset network model for filtering, the approach for processing different colour components is uniform, and the selections during filtering are not flexible enough, resulting in poor encoding and decoding performance during encoding and decoding.

### SUMMARY

The embodiments of the disclosure provide encoding and decoding methods, an encoder, a decoder, a bitstream, and a storage medium, which can make the selection of input information for filtering more flexible without increasing complexity, thereby improving the efficiency of encoding and decoding.

The technical solutions in the embodiments of the disclosure may be implemented as follows.

In a first aspect, an embodiment of the disclosure provides a filtering method, applied to a decoder, and including the following operations.

A bitstream is parsed, and first syntax element identifier information of a component to-be-filtered of a current frame or a current slice is determined. Herein the first syntax element identifier information is used for determining whether a component to-be-filtered of each block in the current frame or the current slice is filtered based on a preset network model.

In response to the first syntax element identifier information indicating that there are components to-be-filtered of partitioned blocks in the current frame or the current slice that are allowed to be filtered by using the preset network model, quantization parameter information of a component to-be-filtered is determined, and second syntax element identifier information is determined.

Based on the second syntax element identifier information, the quantization parameter information, and the preset network model, a current block of the current frame or the current slice is filtered, to obtain a filtered and reconstructed value of the component to-be-filtered of the current block.

In a second aspect, an embodiment of the disclosure provides a filtering method, applied to an encoder, including the following operations.

A first rate-distortion cost of a current frame or a current slice is determined. Herein the first rate-distortion cost is obtained in case that components to-be-filtered of all of partitioned blocks comprised in the current frame or the current slice are not filtered by using a preset network model.

A second rate-distortion cost of the current frame or the current slice is determined. Herein the second rate-distortion cost is obtained in case that the components to-be-filtered of all of the partitioned blocks comprised in the current frame or the current slice are filtered by using the preset network model.

A third rate-distortion cost of the current frame or the current slice is determined. Herein the third rate-distortion cost is obtained in case that there is a component to-be-filtered of at least one of the partitioned blocks in the current frame or the current slice that is allowed to be filtered by using the preset network model, and the at least one of the partitioned blocks is part of the partitioned blocks in the current frame or the current slice.

Based on the first rate-distortion cost, the second rate-distortion cost, and the third rate-distortion cost, first syntax element identifier information of a component to-be-filtered of the current frame or the current slice is determined.

In a third aspect, an embodiment of the disclosure provides a decoder, including a parsing section, a first determining section, and a first filtering section.

The parsing section is configured to parse a bitstream and determine first syntax element identifier information of a component to-be-filtered of a current block. Herein the first syntax element identifier information is used for determining whether each block in a current frame or a current slice is filtered based on a preset network model.

The first determining section is configured to: in response to the first syntax element identifier information indicating that there are components to-be-filtered of partitioned blocks in the current frame or the current slice that are allowed to be filtered by using the preset network model, determine quantization parameter information of a component to-be-filtered, and determine second syntax element identifier information.

The first filtering section is configured to: filter, based on the second syntax element identifier information, the quantization parameter information, and the preset network model, the current block of the current frame or the current slice, to obtain a filtered and reconstructed value of the component to-be-filtered of the current block.

In a fourth aspect, an embodiment of the disclosure provides a decoder, including a first memory and a first processor.

The first memory is configured to store a computer program capable of running on the first processor.

The first processor is configured to execute, when running the computer program, the method in the first aspect.

In a fifth aspect, an embodiment of the disclosure provides an encoder, including a second determining section and a second filtering section.

The second determining section is configured to determine a first rate-distortion cost of a current frame or a current slice. Herein the first rate-distortion cost is obtained in case that components to-be-filtered of all of partitioned blocks comprised in the current frame or the current slice are not filtered by using a preset network model.

The second filtering section is configured to determine a second rate-distortion cost of the current frame or the current slice, herein the second rate-distortion cost is obtained in case that the components to-be-filtered of all of the partitioned blocks comprised in the current frame or the current slice are filtered by using the preset network model; and determine a third rate-distortion cost of the current frame or the current slice, herein the third rate-distortion cost is obtained in case that there is a component to-be-filtered of at least one of the partitioned blocks in the current frame that is allowed to be filtered by using the preset network model, and the at least one of the partitioned blocks is part of the partitioned blocks in the current frame or the current slice.

The second determining section is further configured to: determine, based on the first rate-distortion cost, the second rate-distortion cost and the third rate-distortion cost, first syntax element identifier information of a component to-be-filtered of the current frame or the current slice.

In a sixth aspect, an embodiment of the disclosure provides an encoder, including a second memory and a second processor.

The second memory is configured to store a computer program capable of running on the second processor.

The second processor is configured to execute, when running the computer program, the method in the second aspect.

In a seventh aspect, an embodiment of the disclosure provides a computer storage medium having stored thereon a computer program that: when executed by a first processor, implements the method in the first aspect; or when executed by a second processor, implements the method in the second aspect.

In an eighth aspect, an embodiment of the disclosure provides a bitstream, generated by performing bit-encoding based on information to-be-encoded. Herein the information to-be-encoded includes at least one of: at least one of quantization parameter information and a quantization parameter index, first syntax element identifier information of a component to-be-filtered of a current frame or a current slice, second syntax element identifier information of a component to-be-filtered of a current block, third syntax element identifier information of the current block included in the current frame or the current slice, fourth syntax element identifier information of a current video sequence, and a respective filtered and reconstructed value of each of partitioned blocks included in the current frame or the current slice. Herein the current block is one of the partitioned blocks.

The embodiments of the disclosure provide a filtering method, an encoder, a decoder, a bitstream, and a storage medium. In the decoder, first syntax element identifier information of a component to-be-filtered of a current frame or a current slice is determined by parsing a bitstream, herein the first syntax element identifier information is used for determining whether a component to-be-filtered of each block in the current frame or the current slice is filtered based on a preset network model. In response to the first syntax element identifier information indicating that there are components to-be-filtered of partitioned blocks in the current frame or the current slice that are allowed to be filtered by using the preset network model, quantization parameter information of a component to-be-filtered is determined, and second syntax element identifier information is determined. Based on the second syntax element identifier information, the quantization parameter information, and the preset network model, a current block of the current frame or the current slice is filtered, to obtain a filtered and reconstructed value of the component to-be-filtered of the current block. In the encoder, a first rate-distortion cost of a current frame or a current slice is determined; herein the first rate-distortion cost is obtained in case that components to-be-filtered of all of partitioned blocks included in the current frame or the current slice are not filtered by using a preset network model. A second rate-distortion cost of the current frame or the current slice is determined; herein the second rate-distortion cost is obtained in case that the components to-be-filtered of all of the partitioned blocks included in the current frame or the current slice are filtered by using the preset network model. A third rate-distortion cost of the current frame or the current slice is determined; herein the third rate-distortion cost is obtained in case that there is a component to-be-filtered of at least one of the partitioned blocks in the current frame or the current slice that is allowed to be filtered by using the preset network model, and the at least one of the partitioned blocks is part of the partitioned blocks in the current frame or the current slice. Based on the first rate-distortion cost, the second rate-distortion cost, and the third rate-distortion cost, first syntax element identifier information of a component to-be-filtered of the current frame or the current slice is determined.

The disclosure determines a coding approach with a lowest frame-level rate-distortion cost or a lowest slice-level rate-distortion cost through multiple model inferences, considering cases that no partitioned blocks are filtered, all of the partitioned blocks are filtered, and part of the partitioned blocks is filtered. Quantization parameter information corresponding to each of the components to-be-filtered may be different types of quantization parameter information in different cases. That is to say, quantization parameter information (the optimal quantization parameter information of each of the components to-be-filtered obtained by the encoder through multiple model inferences during encoding) corresponding to different components to-be-filtered of the current frame or the current slice may be different, and may be filtered individually to obtain a respective filtered and reconstructed value of each of the components to-be-filtered. Therefore, each of the components to-be-filtered of the current block may use its own quantization parameter information to perform filtering on the component to-be-filtered in the same preset network model. Therefore, the compression performance for each of the components to-be-filtered can be improved, and the selection of input information (the quantization parameter information) for filtering of different components to-be-filtered can be more flexible without increasing the complexity of the model, thereby improving the efficiency of encoding and decoding.

### BRIEF DESCRIPTION OF THE DRAWINGS

FIG. 1A to FIG. 1C are exemplary distribution diagrams of components in different colour formats according to embodiments of the disclosure;
FIG. 2 is an exemplary schematic diagram of a partition of coding units according to an embodiment of the disclosure;
FIG. 3A is a first exemplary schematic diagram of a network architecture of a neural network model according to an embodiment of the disclosure;
FIG. 3B is a diagram of a first exemplary composition structure of a residual block according to an embodiment of the disclosure;
FIG. 4 is a second exemplary schematic diagram of a network architecture of a neural network model according to an embodiment of the disclosure;
FIG. 5A is a third exemplary schematic diagram of a network architecture of a neural network model according to an embodiment of the disclosure;
FIG. 5B is a diagram of a second exemplary composition structure of a residual block according to an embodiment of the disclosure;
FIG. 6 is an exemplary structural diagram of a video encoding system according to an embodiment of the disclosure;
FIG. 7 is an exemplary structural diagram of a video decoding system according to an embodiment of the disclosure;
FIG. 8 is a schematic flowchart of a decoding method according to an embodiment of the disclosure;
FIG. 9 is a schematic flowchart of an encoding method according to an embodiment of the disclosure;
FIG. 10A is a first exemplary schematic diagram of a selection of quantization parameter information for a block under different components to-be-filtered according to an embodiment of the disclosure;
FIG. 10B is a second exemplary schematic diagram of a selection of quantization parameter information for a block under different components to-be-filtered according to an embodiment of the disclosure;
FIG. 10C is a third exemplary schematic diagram of a selection of quantization parameter information for a block under different components to-be-filtered according to an embodiment of the disclosure;
FIG. 11 is a schematic diagram of a composition structure of a decoder according to an embodiment of the disclosure;
FIG. 12 is a schematic diagram of a hardware structure of a decoder according to an embodiment of the disclosure;
FIG. 13 is a schematic diagram of a composition structure of an encoder according to an embodiment of the disclosure; and
FIG. 14 is a schematic diagram of a hardware structure of an encoder according to an embodiment of the disclosure.

### DETAILED DESCRIPTION

In the embodiments of the disclosure, digital video compression technology mainly focuses on compressing large volumes of digital picture and video data to facilitate transmission and storage, and the like. With the surge in Internet videos and the increasing demand for higher video clarity, although existing digital video compression standards can save a significant amount of video data, there is still a need to pursue a better digital video compression technology to reduce the bandwidth and traffic pressure of digital video transmission.

During the digital video encoding, the encoder reads unequal pixels from the original video sequence in different colour formats, which include luma components and chroma components, that is, the encoder reads a black-and-white or colour picture. Then, the picture is partitioned into blocks, which are then encoded by the encoder. The encoder generally operates in a hybrid framework encoding mode, which generally includes intra prediction and inter prediction, transform and quantization, inverse transform and inverse quantization, in-loop filter, and entropy coding, etc. The intra prediction only refers to information from the same picture and predicts pixel information within the partitioned current block, to eliminate spatial redundancy. The inter prediction may reference picture information from different frames and use motion estimation to search for the most matching motion vector information of the partitioned current block, to eliminate temporal redundancy. The transform and quantization convert predicted picture blocks into the frequency domain, and redistributes energy; and combine the quantization to remove information that is insensitive to the human eye, thereby eliminating visual redundancy. The entropy coding may eliminate character redundancy based on the current context model and probability information of the binary bitstream. The in-loop filter mainly processes pixels after inverse transform and inverse quantization to compensate for the distorted information and to provide a better reference for subsequent encoded pixels.

At present, the scenario in which filtering processing may be performed may be the reference software test platform HPM based on Audio Video coding Standard (AVS) or the versatile video coding (VVC) test model (VTM) based on VVC, which is not limited in the embodiments of the disclosure.

In a video picture, a first video component, a second video component, and a third video component are generally used to represent a coding block (CB). Herein, the three colour components are a luma component, a blue chroma component, and a red chroma component respectively. The luma component is generally denoted by a symbol Y, the blue chroma component is generally denoted by a symbol Cb or U, and the red chroma component is generally denoted by a symbol Cr or V. In this way, the video picture may be represented in an YCbCr format or YUV format, and even RGB format or YCgCo format, which is not limited in the embodiments of the disclosure.

Video compression technology mainly focuses on compressing large volumes of digital picture and video data to facilitate transmission and storage, and the like. With the surge in Internet videos and the increasing demand for higher video clarity, although existing digital video compression standards can save a significant amount of video data, there is still a need to pursue a better digital video compression technology to reduce the bandwidth and traffic pressure of digital video transmission. During the video encoding, the encoder reads unequal pixels from the original video sequence in different colour formats, which include luma components and chroma components of the colour components, that is, the encoder reads a black-and-white or colour picture. Then, the picture is partitioned into blocks, and the block data is then encoded by the encoder.

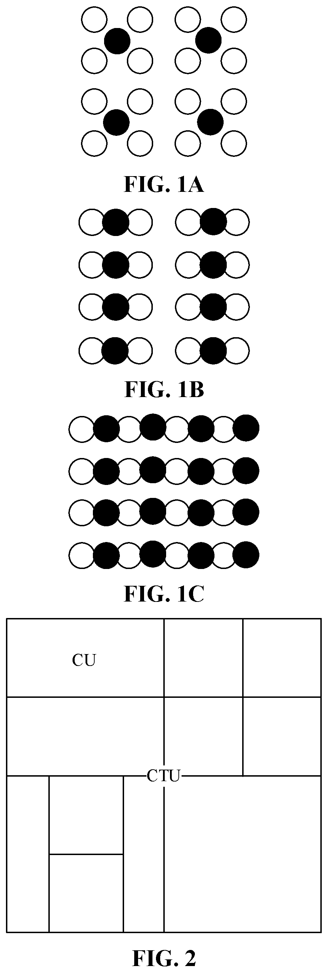

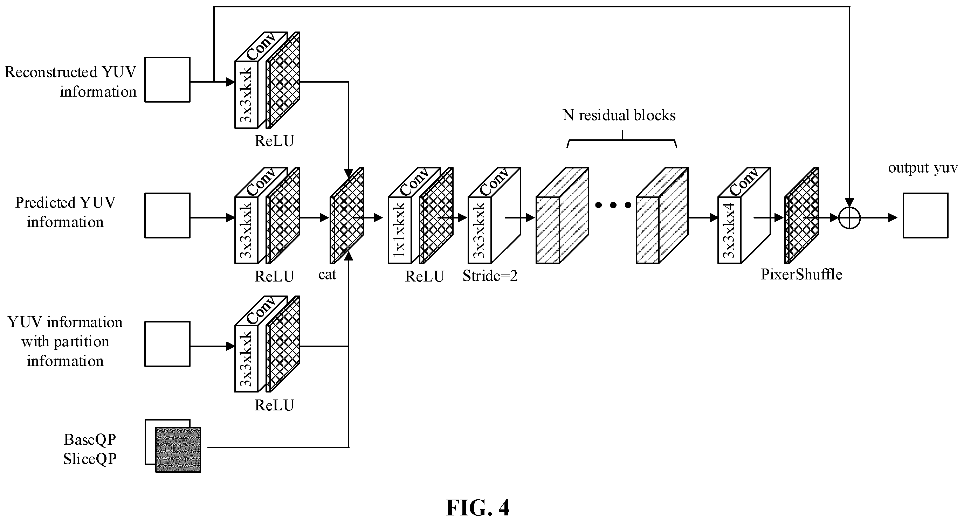

Generally, the digital video compression technology is applied to picture data encoded in YCbCr (YUV) format, with the YUV ratio commonly being 4:2:0, 4:2:2, or 4:4:4. Herein, Y represents luma, Cb (U) represents blue chroma, Cr (V) represents red chroma, and U and V represent chroma to describe colour and saturation. FIG. 1A to FIG. 1C show the distributions of components in different colour formats, herein, white represents Y components, and black-gray represents UV components. As illustrated in FIG. 1A, in terms of colour format, 4:2:0 indicates that for every 4 pixels, there are 4 luma components and 2 chroma components (YYYYCbCr). As illustrated in FIG. 1B, 4:2:2 indicates that for every 4 pixels, there are 4 luma components and 4 chroma components (YYYYCbCrCbCr). As illustrated in FIG. 1C, 4:4:4 indicates full-pixel representation (YYYYCbCrCbCrCbCrCbCr).

At present, common video encoding and decoding standards all adopt a block-based hybrid coding framework. Each picture in the video is partitioned into square largest coding units (LCUs) of the same size (e.g., 128×128, 64×64, etc.), and each LCU may further be partitioned into rectangular coding units (CUs) according to rules. Moreover, a CU may further be partitioned into smaller prediction units (PUs). Specifically, the hybrid coding framework may include modules such as prediction, transform, quantization, entropy coding, and in loop filter. Herein, the prediction module may include intra prediction and inter prediction; and the inter prediction may include motion estimation and motion compensation. Due to the strong correlation between neighbouring pixels within a frame of a video picture, using the intra prediction in the video encoding and decoding technologies may eliminate spatial redundancy between neighbouring pixels. The inter prediction may reference picture information from different frames and use motion estimation to search for the most matching motion vector information of the current partitioned block, to eliminate temporal redundancy. The transform converts predicted picture blocks into the frequency domain, and redistributes energy; and combines the quantization to remove information that is insensitive to the human eye, thereby eliminating visual redundancy. The entropy coding may eliminate character redundancy based on the current context model and probability information of the binary bitstream.

It should be noted that during the video encoding, the encoder first reads picture information, and partitions the picture into several coding tree units (CTUs). A CTU may further be partitioned into several coding units (CUs), which may be either rectangular or square blocks. The specific relationship may be referred to in FIG. 2.

During the intra prediction, a current coding unit cannot reference information from different pictures, and may only use neighbouring coding units within the same picture as reference information for prediction. That is, according to the most of a current encoding order from left to right and top to bottom, the current coding unit may reference an upper-left coding unit, an upper coding unit, and a left coding unit as reference information to predict the current coding unit. The current coding unit then serves as reference information for a next coding unit, thereby predicting the entire picture. If an input digital video is in colour format, that is, an input source of a current mainstream digital video encoder is in YUV 4:2:0 format (i.e., every 4 pixels in the picture consist of 4 Y components and 2 UV components, the encoder will encode Y components and UV components separately by using slightly different encoding tools and technologies. Moreover, the decoding end will decode correspondingly according to different formats.

For the intra prediction part in digital video encoding and decoding, the process mainly references picture information of neighbouring blocks within a current frame to predict a current block. After calculating residual information between the prediction block and the original picture block, processes such as transform and quantization are performed on the residual information, and then the residual information is transmitted to a decoding end. The decoding end receives and parses a bitstream, and then obtains the residual information through operations such as inverse transform and inverse quantization. A predicted picture block obtained by the decoding end through prediction is added with the residual information to obtain a reconstructed picture block.

At present, common video encoding and decoding standards (e.g., H.266/VVC) all adopt a block-based hybrid coding framework. Each frame in the video is partitioned into square largest coding units (LCUs) of the same size (e.g., 128×128, 64×64, etc.). Each LCU may be partitioned into rectangular coding units (CUs) according to rules. A CU may further be partitioned into prediction units (PUs), transform units (TUs), etc. The hybrid coding framework includes modules such as prediction, transform, quantization, entropy coding, and in loop filter. The prediction module includes intra prediction and inter prediction. The inter prediction includes motion estimation and motion compensation. Due to the strong correlation between neighbouring pixels within a frame of a video, the intra prediction in the video encoding and decoding technologies is used to eliminate spatial redundancy between neighbouring pixels. Due to the strong similarity between adjacent frames of the video, the inter prediction in the video encoding and decoding technologies is used to eliminate temporal redundancy between adjacent frames, thereby improving coding efficiency.

A basic process of a video codec is as follows. At an encoding end, a picture is partitioned into blocks, and intra prediction or inter prediction is performed on a current block to generate a prediction block of the current block. An original picture block of the current block is subtracted by the prediction block to obtain a residual block. Transform and quantization are performed on the residual block to obtain a quantization coefficient matrix. The quantization coefficient matrix is entropy coded and output to a bitstream. At a decoding end, the intra prediction or inter prediction is performed on a current block to generate a prediction block of the current block. On the other hand, the bitstream is parsed to obtain a quantization coefficient matrix, and inverse quantization and inverse transform are performed on the quantization coefficient matrix to obtain a residual block. The prediction block and the residual block are added to obtain a reconstructed block. Reconstructed blocks form a reconstructed picture, and in-loop filtering is performed on the reconstructed picture based on the picture or the blocks to obtain a decoded picture. The encoding end also needs to perform similar operations as the decoding end to obtain a decoded picture. The decoded picture may serve as a reference frame for inter prediction for subsequent frames. Block partition information, and mode information or parameter information such as prediction information, transform information, quantization information, entropy coding information, and in-loop filtering information determined by the encoding end need to be output to the bitstream if necessary. The decoding end parses the bitstream and analyzes based on the existing information to determine the same block partition information and mode information or parameter information such as prediction information, transform information, quantization information, entropy coding information, and in-loop filtering information as the encoding end, thereby ensuring that the decoded picture obtained by the encoding end is the same as the decoded picture obtained by the decoding end. The decoded picture obtained by the encoding end is usually referred to as a reconstructed picture. During the prediction, a current block may be partitioned into prediction units; and during the transform, the current block may be partitioned into transform units. The partitions of prediction units and transform units may be different. The above is the basic process of the video codec under the block-based hybrid coding framework. With the development of technology, some modules or operations of this framework or process may be optimized. The current block may be a current CU, a current prediction unit (PU), or a current transform unit (TU), etc., which is not limited in the embodiments of the disclosure.

The Joint Video Experts Team (JVET), an international video coding standard setting organization, has established two exploration experiment groups: one for exploring neural network-based coding and another for exploring beyond VVC, and corresponding expert discussion groups have been formed.

The above exploration experiment group for exploring beyond VVC aims to explore higher coding efficiency based on the latest encoding and decoding standard H.266/VVC, with strict requirements for performance and complexity. A coding method researched by this group is closer to VVC, and may be referred to as a traditional coding method. At present, an algorithm reference model of this exploration experiment has achieved approximately 15% better coding performance compared to the latest VVC reference model VTM.

The method studied by the first exploration experiment group is an intelligent coding method based on neural networks. Currently, deep learning and neural networks are hot topics in various industries, especially in the field of computer vision, where deep learning-based methods often have overwhelming advantages. Experts from JVET standard organization have introduced neural networks into the field of video encoding and decoding. With the powerful learning capability of neural networks, neural network-based coding tools often exhibit very high coding efficiency. In early stages of setting the VVC standard, many companies focused on deep learning-based coding tools and proposed methods including neural network-based intra prediction methods, neural network-based inter prediction methods, and neural network-based in-loop filter methods. Among these, the neural network-based in-loop filter methods has the most outstanding coding performance. After multiple meetings for research and exploration, it was found that a neural network-based in-loop filter method can achieve a coding performance improvement of over 8%. Moreover, a neural network-based in-loop filter scheme studied by the first exploration experiment group once reached a coding performance of up to 12%, contributing nearly half a generation of coding performance improvement.

An embodiment of the disclosure make improvements based on the current exploration experiment proposed at the JVET meeting, and proposes a neural network (NN)-based in-loop filter enhancement scheme. A brief introduction to the current neural network-based in-loop filter scheme proposed at the JVET meeting is first provided below, and then a detailed descriptions of the improvement method in the embodiment of the disclosure is provided.

In the related art, explorations for neural network-based in-loop filter schemes mainly focus on two forms. The first is a scheme that is intra multi-model switchable. The second is a scheme that is intra model non-switchable. However, regardless of which scheme, the architecture of the neural network does not change significantly, and this tool is used within in-loop filter of the traditional hybrid coding framework. Therefore, the basic processing unit for both schemes is the coding tree unit, that is, the largest coding unit size.

The main difference between the first scheme (the intra multi-model switchable) and the second scheme (the intra model non-switchable) is that: during encoding and decoding a current frame, the first scheme may freely switch neural network models, while the second scheme cannot switch the neural network model. Taking the first scheme as an example, when encoding a picture, each coding tree unit has multiple candidate neural network models to choose from. The encoding end selects which neural network model to use for the current coding tree unit to achieve the best filtering effect, and then signals an index of this neural network model into the bitstream. That is, in this scheme, if a coding tree unit needs to be filtered, a coding tree unit-level usage flag is needed to be transmitted first, and then the index of the neural network model is transmitted. If filtering is not needed, only a coding tree unit-level usage flag needs to be transmitted. After parsing the index value, the decoding end loads the neural network model corresponding to this index for the current coding tree unit to filter the current coding tree unit.

Taking the second scheme as an example, when encoding a picture, a neural network model available for each coding tree unit in the current frame is fixed, and the same neural network model is used for each coding tree unit. That is, there is no model selection process for the second scheme at the encoding end. The decoding end parses to obtain a usage flag indicating whether the current coding tree unit is to use neural network-based in-loop filter. If the usage flag is true, a preset model (the same as the encoding end) is used to filter the coding tree unit. If the usage flag is false, no additional operation is performed.

For the first scheme that is intra multi-model switchable, there is strong flexibility at the coding tree unit level, enabling model adjustments based on local details to achieve local optimization for a global better effect. Generally, this scheme has a large number of neural network models, and different neural network models may be trained with different quantization parameters under JVET common test conditions. Furthermore, different types of coded frames may also require different neural network models to achieve better effects. Taking a filter in the related art as an example, the filter uses up to 22 neural network models to cover different types of coded frames and different quantization parameters, with model switching performed at the coding tree unit-level. The filter can provide an improvement in coding performance of more than 10% over VVC.

For the second scheme that is intra model non-switchable, although this scheme has two neural network models overall, there is no model switching within a frame. This scheme performs a judgment at the encoding end. If a type of a current coding frame is an I-frame, a neural network model corresponding to the I-frame is imported, and only the neural network model corresponding to the I-frame is used within the current frame. If a type of the current coding frame is a B-frame, a neural network model corresponding to the B-frame is imported, and only the neural network model corresponding to the B-frame is used within that frame. This scheme can provide an improvement in coding performance of 8.65% over VVC, which is slightly lower than the first scheme, but the overall performance represents an almost unattainable level of coding efficiency compared to traditional coding tools.

In other words, the first scheme has higher flexibility and better coding performance, but this scheme has a fatal drawback in hardware implementation. Specifically, hardware experts are concerned about codes for intra model switching, switching models at the coding tree unit-level means that, in the worst case, the decoding end needs to reload a neural network model each time it processes a coding tree unit. Aside from the complexity of hardware implementation, this also imposes an additional burden even on existing high-performance graphics processing units (GPUs). Moreover, the existence of multiple models also means that a large number of parameters need to be stored, which is also a significant overhead burden in current hardware implementation. However, for the second scheme, this neural network-based in-loop filter further explores the powerful generalization capability of deep learning. Instead of simply using reconstructed samples as the input to the model, the neural network-based in-loop filter takes various information as input, and more information provides more assistance for the neural network to learn, allowing the model's generalization capability to be better reflected and removing many unnecessary redundant parameters. A continuously updated scheme has already shown that, for different test conditions and quantization parameters, a simplified low-complexity neural network model may be sufficient. Compared to the first scheme, the second scheme eliminates the consumption of constantly reloading models and the requirement for larger storage space due to a large number of parameters.

Neural network architectures in these two schemes are introduced below.

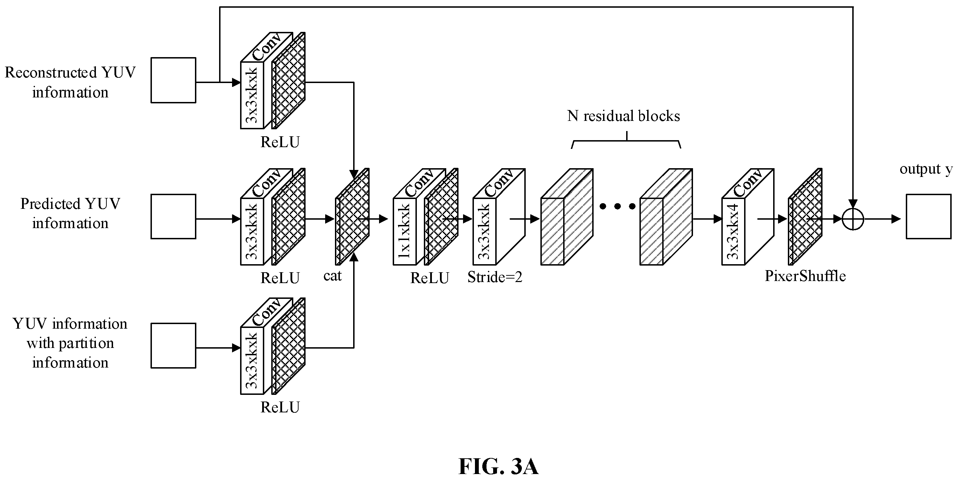

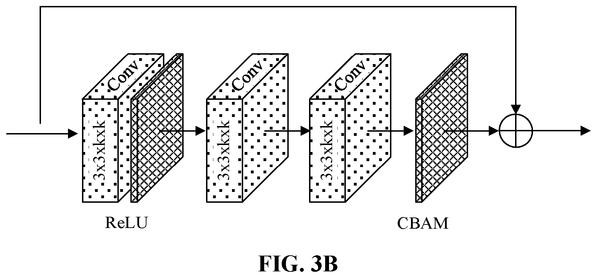

Referring to FIG. 3A, which shows a schematic diagram of a network architecture of a neural network model. As illustrated in FIG. 3A, a main structure of the network architecture may be composed of multiple residual blocks (ResBlocks). A composition structure of a residual block is illustrated in FIG. 3B. In FIG. 3B, a single residual block is composed of multiple convolutional layers (Conv) and a convolutional block attention module (CBAM) layer connected to the multiple convolutional layers. As an attention mechanism module, the CBAM is mainly responsible for further extracting detailed features. Furthermore, there is a direct skip connection structure between the input and output of the residual block. Here, the multiple convolutional layers in FIG. 3B include a first convolutional layer, a second convolutional layer, and a third convolutional layer, and an activation layer is connected after the first convolutional layer. Exemplarily, a size of the first convolutional layer is 1×1×k×n, a size of the second convolutional layer is 1×1×n×k, and a size of the third convolutional layer is 3×3×k×k, herein k and n are positive integers. The activation layer may include a rectified linear unit (ReLU) function, also referred to as a linear rectification function, which is a commonly used activation function in current neural network models. ReLU is essentially a ramp function that is simple and converges quickly.

In FIG. 3A, there is also a skip connection structure in the network architecture, which connects the input reconstructed YUV information with the output after the pixel shuffle module. The main function of pixel shuffle is to convert low-resolution feature maps into high-resolution feature maps through the convolution and the shuffle among multiple channels. As an up-sampling approach, the pixel shuffle may effectively enlarge a downscaled feature map. Furthermore, the inputs of this network architecture mainly include reconstructed YUV information (rec_yuv), predicted YUV information (pred_yuv), and YUV information with partition information (par_yuv). After performing simple convolution and activation operations on the all inputs, these inputs are concatenated (Cat) and then fed into the main structure. It is worth noting that processing of the YUV information with partition information may be different for I-frames and B-frames. Specifically, the YUV information with partition information needs to be input for the I-frames, while the YUV information with partition information does not need to be input for the B-frames.

In view of above, for one of quantization parameter points of I-frames and B-frames required by JVET for common test, there is a corresponding neural network model in the first scheme. Furthermore, since the YUV three colour components are mainly composed of a luma channel and a chroma channel, there are differences in the colour components.

Referring to FIG. 4, which shows a schematic diagram of a network architecture of another neural network model. As illustrated in FIG. 4, a main structure of this network architecture of the second scheme is basically the same as that of the first scheme, with the difference being that: the input for the second scheme includes quantization parameter information as an additional input compared to the first scheme. The first scheme mentioned above loads different neural network models based on different quantization parameter information to achieve more flexible processing and more efficient coding performance, while the second scheme incorporates the quantization parameter information as an input to the network to improve the generalization capability of the neural network, enabling the model to adapt and provide good filtering performance under different quantization parameter conditions.

From FIG. 4, it may be seen that two types of quantization parameters are input into the neural network model, one is BaseQP and the other is SliceQP. BaseQP indicates the sequence-level quantization parameter set by the encoder when encoding a video sequence, which is the quantization parameter point required by JVET for common test and is also a parameter used for selecting the neural network model in the first scheme. SliceQP refers to a quantization parameter of the current frame, which may be different from the sequence-level quantization parameter. This is because during the video encoding, the quantization condition for B-frames is different from that of I-frames, and the quantization parameters are also different at different temporal levels. Therefore, SliceQP is generally different from BaseQP in B-frames. Therefore, in the related art, the input of the neural network model for I-frames only require SliceQP, while the neural network model for B-frames requires both BaseQP and SliceQP as inputs.

Furthermore, there is another difference between the second scheme and the first scheme. In the first scheme, the output of the model generally does not require additional processing. If the output of the model is residual information, it is added to the reconstructed samples of the current coding tree unit to serve as the output of the neural network-based in-loop filter tool. If the output of the model is complete reconstructed samples, the output of the model is the output of the neural network-based in-loop filter tool. In contrast, the output of the second scheme usually requires a scaling process. Taking the residual information outputted by the model as an example, the model infers and outputs the residual information of the current coding tree unit. The residual information is scaled and then is added to the reconstructed sample information of the current coding tree unit; herein, a scaling factor is determined by the encoding end, and needs to be signalled into the bitstream transmitted to the decoding end.

In view of above, it is precisely because quantization parameters are used as additional information inputs, so that the reduction in the number of models is achieved and this scheme has become the most popular solution at current JVET meetings. Moreover, a general neural network-based in-loop filter scheme may not be exactly the same as the above two schemes in the specific details, but the main idea is basically the same. For example, different details of the second scheme may be reflected in the design of the neural network architecture, such as convolution sizes of ResBlocks, the number of convolutional layers of ResBlocks, and whether an attention module is included in ResBlocks. The different details of the second scheme may further be reflected in the inputs of the neural network, which may even include more additional information, such as a boundary strength value of deblocking filtering.

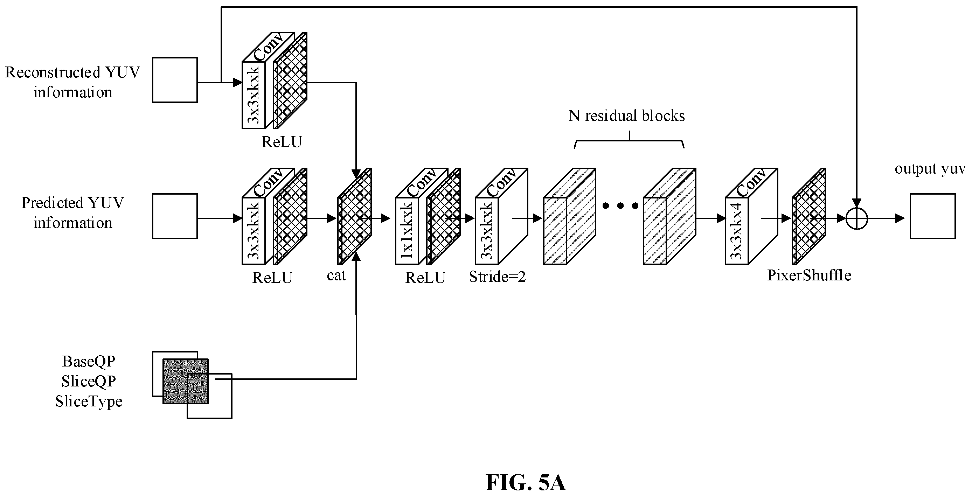

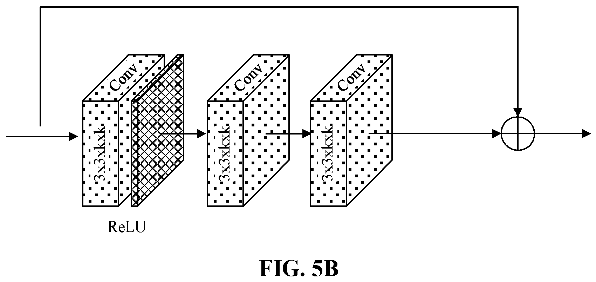

Furthermore, the neural network-based in-loop filter scheme may be further optimized. For example, pictures with different frame types and different quantization parameter configurations is processed by a single model, and filtering results for different colour components are outputted simultaneously by the same model. A main framework of this model is illustrated in FIG. 5A. A composition structure of a residual block is illustrated in FIG. 5B. The inputs of the neural network model include reconstructed sample YUV, predicted sample YUV, BaseQP, SliceQP, and frame type. Through this single neural network model, a single inference will output filtered picture results of three colour components, thereby greatly reducing the complexity of model storage and computation.

The first scheme and the second scheme significantly reduce the implementation complexity of neural network-based in-loop filter technology while maintaining a relatively impressive performance. However, whether it is a single-model or dual-model neural network-based in loop filter, the processing of luma and chroma components is completed by a single model, and good performance for luma components can be maintained through parameter tuning training. However, if four neural network models are used to improve the in-loop filtering and provide an independent neural network model for chroma components, the compression performance for chroma components can be improved by an average of 2% to 5%. That is to say, if there is no performance transfer for luma components, there is still room for improvement in the performance of chroma components. Therefore, by adding an independent neural network model for chroma components or adding an additional channel for BaseQP input to control the quantization parameters of the chroma components, the compression performance for the chroma components can be improved. However, adding the model and adding an additional channel for BaseQP input will increase the computational complexity of the model.

In the embodiments of the disclosure, a scheme is proposed to adapt to the quantization parameter requirements among different colour components through multiple inferences of a same model. Referring to a preset neural network model architecture illustrated in FIG. 5A, for a quantization parameter BaseQP or sliceQP, the preset network model outputs filtering results for three different colour components during the inference stage. For another different quantization parameter, the preset network model infers a current picture to obtain another set of filtering results for three different colour components. The rate-distortion cost is used to compare the filtering results of the three different colour components for different quantization parameters, the best result for each colour component is taken as the output of the preset network model, which can provide good support for the compression performance for each colour component without increasing the complexity of the model and channels.

Embodiments of the disclosure are described in detail below with reference to the drawings.

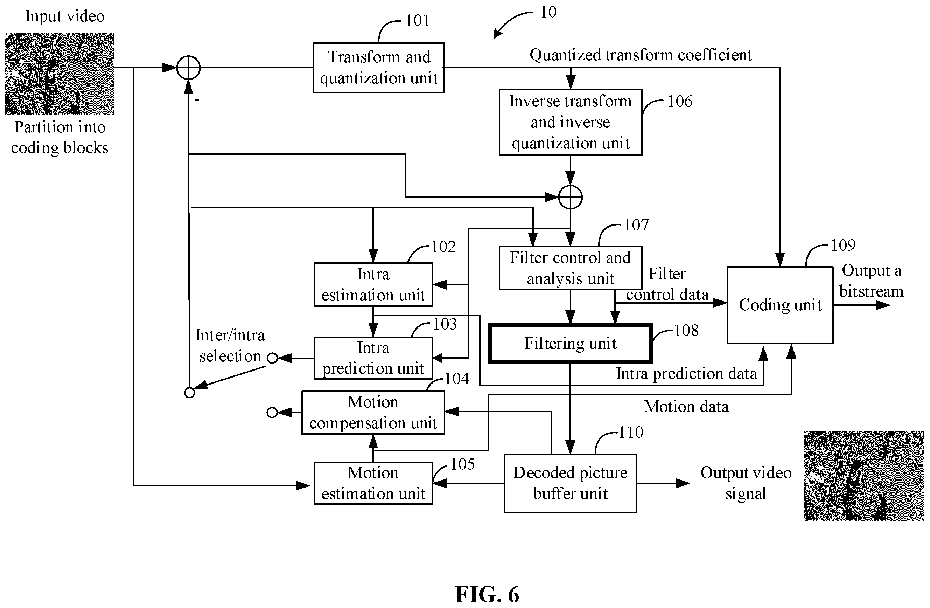

An embodiment of the disclosure provides a video encoding system, and FIG. 6 is a schematic diagram of a composition structure of the video encoding system according to the embodiment of the disclosure. The video encoding system 10 includes: a transform and quantization unit 101, an intra estimation unit 102, an intra prediction unit 103, a motion compensation unit 104, a motion estimation unit 105, an inverse transform and inverse quantization unit 106, a filter control and analysis unit 107, a filtering unit 108, an coding unit 109, and a decoded picture buffer unit 110, etc. Here, the filtering unit 108 may implement deblocking filtering (DBF)/sample adaptive offset (SAO) filtering/adaptive loop filter (ALF) filtering. The coding unit 109 may implement header information encoding and context-based adaptive binary arithmetic coding (CABAC). For an input original video signal, a video coding block may be obtained by partitioning the coding tree unit (CTU). Then, the residual pixel information obtained by the intra prediction or inter prediction is transformed by the transform and quantization unit 101 for the video coding block, which includes transforming the residual information from a pixel domain to a transform domain and quantizing a obtained transform coefficient to further reduce the bitrate. The intra estimation unit 102 and the intra prediction unit 103 are used for the intra prediction of the video coding block. Specifically, the intra estimation unit 102 and the intra prediction unit 103 are used to determine the intra prediction mode to be used to encode the video coding block. The motion compensation unit 104 and the motion estimation unit 105 are used to perform the inter prediction coding of a received video coding block relative to one or more blocks of one or more reference pictures, to provide temporal prediction information. The motion estimation performed by the motion estimation unit 105 is a process for generating motion vectors that may estimate the motion of the video coding block, and then, the motion compensation unit 104 performs the motion compensation based on the motion vectors determined by the motion estimation unit 105. After determining the intra prediction mode, the intra prediction unit 103 is further used to provide selected intra prediction data to the coding unit 109, and the motion estimation unit 105 also transmit the motion vector data that is determined through calculation to the coding unit 109. Furthermore, the inverse transform and inverse quantization unit 106 is used for reconstructing the video coding block; a residual block is reconstructed in the pixel domain; a blocking effect artifact of the reconstructed residual block is removed by the filter control and analysis unit 107 and the filtering unit 108; and then, the reconstructed residual blocks are added into a prediction block in a frame in the decoded picture buffer unit 110, to generate a reconstructed video coding block. The coding unit 109 is used to encode various encoding parameters and quantized transform coefficients. In a CABAC-based encoding algorithm, a context content may be based on neighbouring coding blocks, and may be used for encoding the information that indicates the determined intra prediction mode, to output a bitstream of the video signal. The decoded picture buffer unit 110 is used to store the reconstructed video coding blocks for prediction reference. As the progress of the video picture encoding, new reconstructed video coding blocks will be continuously generated, and all of these reconstructed video coding blocks may be stored in the decoded picture buffer unit 110.

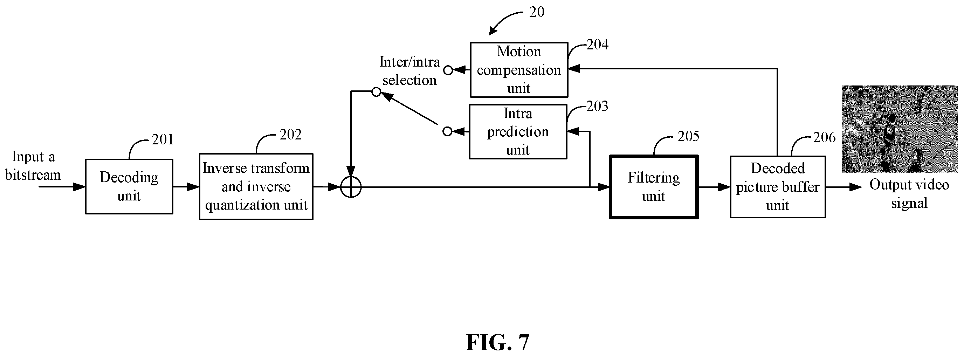

An embodiment of the disclosure provides a video decoding system, and FIG. 7 is a schematic diagram of a composition structure of the video decoding system according to the embodiment of the disclosure. The video decoding system 20 includes: a decoding unit 201, an inverse transform and inverse quantization unit 202, an intra prediction unit 203, a motion compensation unit 204, a filtering unit 205, a decoded picture buffer unit 206, etc. Here, the decoding unit 201 may implement header information decoding and CABAC decoding. The filtering unit 205 may implement DBF filtering/SAO filtering/ALF filtering. After the input video signal is encoded by the encoding process as illustrated in FIG. 3A, the bitstream of the video signal is output. When the bitstream is input into the video decoding system 20, the bitstream firstly passes through the decoding unit 201 to obtain a decoded transform coefficient. The decoded transform coefficient is processed by the inverse transform and inverse quantization unit 202, to generate a residual block in the pixel domain. The intra prediction unit 203 may be used to generate prediction data of a current video coding block, based on the determined intra prediction mode and data from previously decoded blocks of the current frame or picture. The motion compensation unit 204 determines prediction information for the video coding block by parsing the motion vectors and other associated syntax elements, and uses the prediction information to generate a prediction block for the video coding block that is being decoded. The decoded video block is formed by summing the residual block from the inverse transform and inverse quantization unit 202 and the corresponding prediction block generated by the intra prediction unit 203 or the motion compensation unit 204. The decoded video signal passes through the filtering unit 205, to remove the blocking effect artifact, which may improve the video quality. Then, the decoded video block is stored in the decoded picture buffer unit 206. The decoded picture buffer unit 206 stores reference pictures for subsequent intra prediction or motion compensation; meanwhile, the decoded picture buffer unit 206 also is used to output the video signal, i.e., the restored original video signal may be obtained.

It should be noted that the filtering method according to the embodiments of the disclosure may be applied to the filtering unit 108 illustrated in FIG. 6 (denoted by the black bold block), and may also be applied to the filtering unit 205 illustrated in FIG. 7 (denoted by the black bold block). That is to say, the filtering method in the embodiments of the disclosure may be applied to the video encoding system (referred to as "encoder"), the video decoding system (referred to as "decoder"), or even to both the video encoding system and the video decoding system at the same time, which is not limited in the embodiments of the disclosure.

Based on the scheme of processing pictures with different frame types and different quantization parameter configurations by a single model, and simultaneously outputting different colour component filtering results by the same model, the embodiments of the disclosure may utilize the adjustment of multiple model inference processes through different input parameters to provide more selections and possibilities for the encoder, thereby improving the coding performance without increasing the complexity of the model.

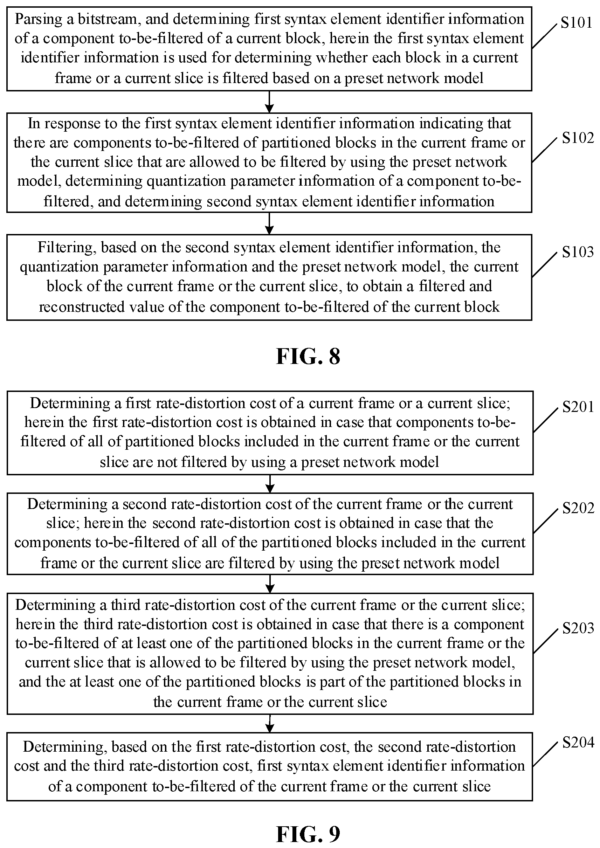

An embodiment of the disclosure provides a filtering method, applied to a decoder, which is illustrated in FIG. 8 and may include the following operations S101 to S103.

At S101, a bitstream is parsed, and first syntax element identifier information of a component to-be-filtered of a current block is determined. The first syntax element identifier information is used for determining whether each block in a current frame or a current slice is filtered based on a preset network model.

In an embodiment of the disclosure, a neural network model-based in-loop filtering method may be applied. Specifically, the in-loop filtering method may be obtained based on a neural network model with multiple input parameters.

At a decoding end, a decoder performs intra prediction or inter prediction for a current block to generate a prediction block of the current block. At the same time, the decoder parses a bitstream to obtain quantization parameter information, performs inverse quantization and inverse transform on the quantization parameter information to obtain a residual block, and adds the prediction block and the residual block to obtain a reconstructed block. Reconstructed blocks forms a reconstructed picture. The decoder performs in-loop filter on the reconstructed picture based on the picture or blocks to obtain a decoded picture.

It should be noted that an original picture may be partitioned into CTUs, CUs by partitioning a CTU, or TUs by partitioning a CU, etc. Therefore, the filtering method in the embodiment of the disclosure may be applied not only to CU-level in-loop filter (in this case, block partition information is CU partition information), but also to CTU-level in-loop filter (in this case, the block partition information is CTU partition information) or TU-level in-loop filter, which is not limited in the embodiments of the disclosure. That is to say, in the embodiment of the disclosure, a block may refer to a CTU, a CU, or a TU, which is not limited in the embodiments of the disclosure.

In an embodiment of the disclosure, during the process of performing in-loop filter on a reconstructed picture of a current frame or a current slice, the decoder may parse a bitstream to first parse a sequence-level enable flag (sps_nnlf_enable_flag), i.e., fourth syntax element identifier information. Herein, the sequence-level enable flag is a switch to determine whether a filtering function is enabled for the entire video sequence to-be-processed. Herein, the fourth syntax element identifier information may determine whether the filtering function is enabled for the entire video sequence to-be-processed.

It should be noted that for the fourth syntax element identifier information (sps_nnlf_enable_flag), the fourth syntax element identifier information is determined by the value of the sequence-level enable flag obtained by decoding. In some embodiments, the decoder may parse the bitstream, and determine the fourth syntax element identifier information of the video sequence to-be-processed. In detail, the decoder may obtain the value of the fourth syntax element identifier information.

In some embodiments of the disclosure, if the value of the fourth syntax element identifier information is a first value, it is determined that the fourth syntax element identifier information indicates that the filtering function is enabled for the video sequence to-be-processed, that is, the sequence-level enable flag represents allowance. If the value of the fourth syntax element identifier information is a second value, it is determined that the fourth syntax element identifier information indicates that the filtering function is disabled for the video sequence to-be-processed, that is, the sequence-level enable flag represents disallowance.

In an embodiment of the disclosure, the first value and the second value are different. The first value and the second value may be in the form of parameters or numbers. Specifically, the fourth syntax element identifier information may be a parameter written into a profile, or a value of a flag, which is not specifically limited herein.

Exemplarily, taking the flag as an example, there are two ways to set the flag: enable flag (enable_flag) and disable flag (disable_flag). Assuming that the value of the enable_flag is a first value and the value of the disable_flag is a second value, the first value may be set to 1, and the second value may be set to 0; or the first value may be set to true, and the second value may be set to false. No specific limits are made thereto in the embodiments of the disclosure.

In an embodiment of the disclosure, in response to the fourth syntax element identifier information indicating that a sequence including the current frame or the current slice is allowed to be filtered by using the preset network model, that is, in response to the value of the fourth syntax element identifier information being the first value, the bitstream is parsed, and the first syntax element identifier information of the component to-be-filtered of the current block is determined. Herein the fourth syntax element identifier information is used for determining whether each block in the current frame or the current slice is filtered based on the preset network model.

It should be noted that in an embodiment of the disclosure, the video sequence to-be-processed may be first partitioned into slices to obtain multiple slices. Then, each slice is further partitioned. When the decoder decodes at the frame-level or slice-level, the decoding method according to the embodiments of the disclosure may be adopted.

In some embodiments of the disclosure, in response to the sequence-level enable flag representing allowance, the decoder parses the first syntax element identifier information of the component to-be-filtered of the current frame or the current slice where the current block is located, and obtains a preset network model-based frame-level switch flag or slice-level switch flag (i.e., the first syntax element identifier information).

Herein the frame-level switch flag or slice-level switch flag indicates whether each block of the current frame or the current slice is filtered based on the preset network model.

It should be noted that in the embodiments of the disclosure, the component to-be-filtered may refer to a colour component. The frame-level switch flag or slice-level switch flag may correspond to each individual video component. When the video component herein is a colour component, that is, the component to-be-filtered may be a colour component, the frame-level switch flag or slice-level switch flag may further indicate whether all blocks for the current colour component (the component to-be-filtered) are filtered by using neural network-based in-loop filter technology.

Herein the colour component may include at least one of: a first colour component, a second colour component, and a third colour component. The first colour component may be a luma component. The second colour component and the third colour component may be chroma components (e.g., the second colour component is a blue chroma component, and the third colour component is a red chroma component; or the second colour component is a red chroma component, and the third colour component is a blue chroma component).

Exemplarily, taking the frame-level switch flag as an example, if the component to-be-filtered is a luma component, the first syntax element identifier information may be ph_nnif_luma_ctrl_flag; and if the component to-be-filtered is a chroma component, the first syntax element identifier information may be ph_nnif_chroma_ctrl_flag.

That is to say, different first syntax element identifier information is set for different colour components in the current frame or the current slice. After parsing the bitstream, the decoder may first determine the first syntax element identifier information of the component to-be-filtered. In response to the first syntax element identifier information indicating that there are components to-be-filtered of partitioned blocks in the current frame or the current slice that are allowed to be filtered by using the preset network model, the decoder then needs to decode and obtain the value of the first syntax element identifier information.

In some embodiments of the disclosure, the operation that the decoder parses the bitstream and determines the first syntax element identifier information of the component to-be-filtered of the current frame or the current slice includes that: the bitstream is parsed, and the value of the first syntax element identifier information of the component to-be-filtered of the current frame or the current slice is obtained.

In response to the first syntax element identifier information (the value of the first syntax element identifier information) being a third value, it is determined that the first syntax element identifier information indicates that the current frame or the current slice is not allowed to be filtered by using the preset network model.

In response to the first syntax element identifier information (the value of the first syntax element identifier information) being a fourth value, it is determined that the first syntax element identifier information indicates that components to-be-filtered of all of the partitioned blocks in the current frame or the current slice are allowed to be filtered by using the preset network model.

In response to the first syntax element identifier information (the value of the first syntax element identifier information) being a fifth value, it is determined that the first syntax element identifier information indicates that there is at least one of the partitioned blocks in the current frame or the current slice that is allowed to be filtered by using the preset network model. Herein, the at least one of the partitioned blocks is part of the partitioned blocks in the current frame or the current slice.

In an embodiment of the disclosure, the value of the first syntax element identifier information has the following three cases. The first case is that the current frame or the current slice is not allowed to be filtered by using the preset network model. The second case is that all partitioned blocks in the current frame or the current slice are allowed to be filtered by using the preset network model. The third case is that part of the partitioned blocks in the current frame or the current slice is allowed to be filtered by using the preset network model. For the three different cases mentioned above, the decoder may use three different values to represent each case.

Herein the value of the first syntax element identifier information in the first case is represented by a third value, the value of the first syntax element identifier information in the second case is represented by a fourth value, and the value of the first syntax element identifier information in the third case is represented by a fifth value. Exemplarily, the third value may be 0, the fourth value may be 1, and the fifth value may be 2. The setting way of the third value to the fifth value is not limited in the embodiments of the disclosure.

It should be noted that in response to the value of the first syntax element identifier information not being the third value, it is determined that the first syntax element identifier information indicates that there are the partitioned blocks in the current frame or the current slice that require to be filtered. That is, for the second case and the third case, the filtering situation of the current block may be determined through second syntax element identifier information. In the second case, the second syntax element identifier information indicates that each block in the current frame or the current slice is filtered. In the third case, there are some of the blocks that use the neural network-based in-loop filter technology, there are also some of the blocks that do not use the neural network-based in-loop filter technology; and thus, further parsing of block-level enable flags of all blocks in the current frame is required for determination (second syntax element identifier information). Herein the current block is one of the partitioned blocks in the current frame or the current slice, and there are multiple partitioned blocks in the current block or current slice.

It should be noted that in the embodiments of the disclosure, the filtering method according to the embodiment of the disclosure may be used for different components to-be-filtered; and for different components to-be-filtered, the first syntax element identifier information for each component to-be-filtered may be determined.

At S102, in response to the first syntax element identifier information indicating that there are components to-be-filtered of partitioned blocks in the current frame or the current slice that are allowed to be filtered by using the preset network model, quantization parameter information of a component to-be-filtered is determined, and second syntax element identifier information is determined.

In an embodiment of the disclosure, in response to the first syntax element identifier information not being the third value, the first syntax element identifier information indicates that there are components to-be-filtered of partitioned blocks in the current frame or the current slice that are allowed to be filtered by using the preset network model, that is, the first syntax element identifier information indicates that components to-be-filtered of all partitioned blocks in the current frame or the current slice that are allowed to be filtered by using the preset network model, or indicates that there is a component to-be-filtered of at least one of the partitioned blocks (at least part of the partitioned blocks) in the current frame or the current slice that is allowed to be filtered by using the preset network model.

At this point, it is necessary to continue parsing the bitstream to determine the second syntax element identifier information of the component to-be-filtered of the current block. Furthermore, the current block herein refers to a partitioned block that is to be in-loop filtered currently, which may be one of the partitioned blocks included in the current frame or the current slice.

In an embodiment of the disclosure, for one of components to-be-filtered, i.e., one of colour components, the decoder may decode the first syntax element identifier information of each of the components to-be-filtered. For a component to-be-filtered, in response to a value of first syntax element identifier information for this component to-be-filtered not being a third value, it indicates that for this component to-be-filtered, a current block may be filtered by using a preset network model. Therefore, for this component to-be-filtered, quantization parameter information at frame-level or slice-level is certainly present in the bitstream. Therefore, in response to the first syntax element identifier information not being the third value, the quantization parameter information of the component to-be-filtered may be determined through the bitstream.

In some embodiments of the disclosure, a process of determining the quantization parameter information of the component to-be-filtered may include the following two ways:
(1) The bitstream is parsed to determine a quantization parameter index of the component to-be-filtered of the current block; and
   based on the quantization parameter index, the corresponding quantization parameter information of the component to-be-filtered of the current block is determined from a quantization parameter candidate set.

It should be noted that in an embodiment of the disclosure, a first quantization parameter index and a second quantization parameter index are signalled into the bitstream. At this point, the decoder may obtain the first quantization parameter index by parsing the bitstream. Then, based on the first quantization parameter index, a block quantization parameter value of a first colour component (corresponding to a luma component) may be determined from a first quantization parameter candidate set. The decoder may further obtain the second quantization parameter index by parsing the bitstream. Then, based on the second quantization parameter index, a block quantization parameter value of the second colour component (corresponding to chroma component) may be determined from a second quantization parameter candidate set.

(2) The bitstream is parsed to determine the corresponding quantization parameter information of the component to-be-filtered of the current block.

It should be noted that in an embodiment of the disclosure, a block quantization parameter value of a first colour component and block quantization parameter information of a second colour component are signalled into the bitstream. In this way, the decoder may directly determine block quantization parameter information of the first colour component and the block quantization parameter information of the second colour component by parsing the bitstream.

In the embodiments of the disclosure, the decoder may parse a quantization parameter index corresponding to each of different components to-be-filtered from the bitstream, and then determine the quantization parameter information of the component to-be-filtered from the quantization parameter candidate set based on the quantization parameter index, that is, obtain the quantization parameter information of the current block for the component to-be-filtered. Alternatively, the decoder may directly parse the bitstream to obtain the quantization parameter information of the component to-be-filtered of the current block or the current slice.

It should be noted that for the current frame or the current slice, quantization parameter information corresponding to different components to-be-filtered may be different. This is because, during encoding, the encoder performs multiple model inferences by traversing quantization parameters for each of the different components to-be-filtered, to find the quantization parameter information with a lowest rate-distortion cost for each of the different components to-be-filtered. Therefore, the quantization parameter information corresponding to different components to-be-filtered may be different.

Exemplarily, in an embodiment of the disclosure, the quantization parameter index of the luma component may be represented by nnif_luma_qp_index, and the two chroma components may be represented by nnif_chromal_qp_index and nnif_chroma2_qp_index.

Herein, in response to the first syntax element identifier information indicating that there are luma components of the partitioned blocks in the current frame or the current slice that are allowed to be filtered by using the preset network model, quantization parameter information of a luma component is determined, which may be represented as:

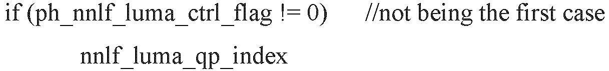

In response to the first syntax element identifier information indicating that there are chroma components of the partitioned blocks in the current frame or the current slice that are allowed to be filtered by using the preset network model, quantization parameter information of chroma components is determined, which may be represented as:

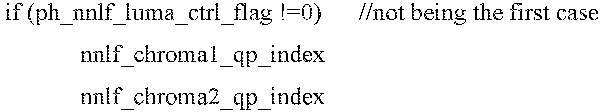

It should be noted that in an embodiment of the disclosure, the decoder may further determine a value of the second syntax element identifier information by determining whether the value of the first syntax element identifier information is the fourth value or the fifth value.

In some embodiments of the disclosure, in response to the value of the first syntax element identifier information being the fourth value, the first syntax element identifier information indicates that components to-be-filtered of all of the partitioned blocks in the current frame or the current slice are allowed to be filtered by using the preset network model, the quantization parameter information of the component to-be-filtered is determined from the bitstream, and a first value is assigned to the second syntax element identifier information.

It should be noted that in response to the value of the first syntax element identifier information being the fourth value, all blocks belonging to the current frame or the current slice are filtered by using the preset network model. Therefore, the decoder assigns the second syntax element identifier information of each of the partitioned blocks belonging to the current frame or the current slice to the first value, which indicates that all blocks of the current frame or the current slice are filtered by using the preset network model.

It should be noted that the decoder parses the first syntax element identifier information, and if it is the second case mentioned above, the decoder traverses, for the component to-be-filtered, each partitioned block of the current frame or the current slice, and determines the second syntax element identifier information corresponding to each of the partitioned blocks for the component to-be-filtered as the first value, that is, it is determined to use the preset network model for filtering at the block-level.

In an embodiment of the disclosure, the second syntax element identifier information is a block-level usage flag. For different components to-be-filtered, each of the partitioned blocks corresponds to a block level usage flag for the respective component to-be-filtered.

Exemplarily, in an embodiment of the disclosure, a block-level usage flag corresponding to a luma component is represented as ctb_nnif_luma _flag. Block-level usage flags corresponding to chroma components are represented as ctb_nnif_chroma1_flag and ctb_nnif_chroma2_flag.

For each component to-be-filtered, in response to the first syntax element identifier information indicating that it is in the second case, the decoder may not only determine the quantization parameter information of the component to-be-filtered based on the bitstream, but also determine second syntax element identifier information of each of the partitioned blocks for each of components to-be-filtered as the first value.

Exemplarily, the value of the first syntax element identifier information being the fourth value is represented as: if (ph_nnif_ luma_ctrl_flag == 1).

The first syntax element identifier information indicates that luma components of all of the partitioned blocks in the current frame or the current slice are allowed to be filtered by using the preset network model; and that a first value is assigned to second syntax element identifier information of a luma component is represented as:

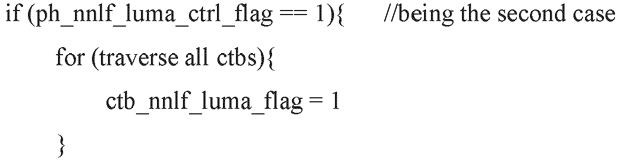

The first syntax element identifier information indicates that chroma components of all of the partitioned blocks in the current frame or the current slice are allowed to be filtered by using the preset network model, and that a first value is assigned to second syntax element identifier information of chroma components is represented as:

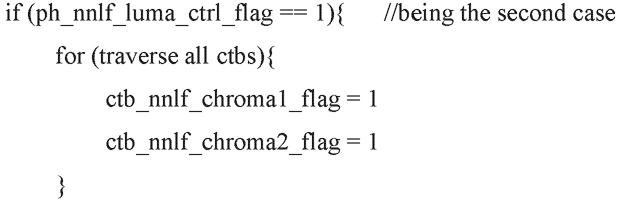

**In** some embodiments of the disclosure, in response to the value of the first syntax element identifier information being the fifth value, the first syntax element identifier information indicates that there is a component to-be-filtered of at least one of the partitioned blocks in the current frame or the current slice that is allowed to be filtered by using the preset network model, the quantization parameter information of the component to-be-filtered is determined from the bitstream, and the second syntax element identifier information is determined from the bitstream. The at least one of the partitioned blocks is part of the partitioned blocks in the current frame or the current slice.

It should be noted that in response to the value of the first syntax element identifier information being the fifth value, there is part of the partitioned blocks in all blocks of the current frame or the current slice that is filtered by using the preset network model. Therefore, the decoder needs to parse second syntax element identifier information of each of the partitioned blocks for the component to-be-filtered from the bitstream, to determine whether the current block or each of the blocks uses the preset network model for filtering.

In an embodiment of the disclosure, the decoder parses the first syntax element identifier information, and if it is the third case mentioned above, the decoder parses the bitstream and determines the second syntax element identifier information corresponding to each of the partitioned blocks for the component to-be-filtered. Based on the value of the second syntax element identifier information corresponding to each of the partitioned blocks for each of the components to-be-filtered, whether each of the partitioned blocks uses the preset network model for filtering is determined.

In an embodiment of the disclosure, the second syntax element identifier information is a block-level usage flag. For different components to-be-filtered, each of the partitioned blocks corresponds to a block-level usage flag for the respective component to-be-filtered.

Exemplarily, in an embodiment of the disclosure, a block-level usage flag corresponding to a luma component is represented as ctb_nnif_luma _flag. Block-level usage flags corresponding to chroma components are represented as ctb_nnif_chromal_flag and ctb_nnif_chroma2_flag.

For each component to-be-filtered, in response to the first syntax element identifier information indicating that it is in the third case, the decoder may not only determine the quantization parameter information of the component to-be-filtered based on the bitstream, but also obtain second syntax element identifier information for each of the components to-be-filtered by parsing the bitstream.

In an embodiment of the disclosure, in response to the value of the second syntax element identifier information of the component to-be-filtered being the first value, it is determined that the second syntax element identifier information indicates that the partitioned block for the component to-be-filtered is filtered by using the preset network model, that is, the block-level usage flag of the component to-be-filtered represents usage. In response to the value of the second syntax element identifier information of the component to-be-filtered being the second value, it is determined that the second syntax element identifier information indicates that the partitioned block for the component to-be-filtered is not filtered by using the preset network model, that is, the block-level usage flag of the component to-be-filtered represents non-usage.

In an embodiment of the disclosure, the first value and the second value are different. The first value and the second value may be in the form of parameters or numbers. Specifically, the second syntax element identifier information may be a parameter written into a profile, or a value of a flag, which is not specifically limited herein.

Exemplarily, taking the flag as an example, there are two ways to set the flag: enable flag (enable _flag) and disable flag (disable _flag). Assuming that the value of the enable _flag is a first value and the value of the disable _flag is a second value, the first value may be set to 1, and the second value may be set to 0; or the first value may be set to true, and the second value may be set to false. However, no specific limits are made thereto in the embodiments of the disclosure.

Exemplarily, the value of the first syntax element identifier information being the fifth value is represented as: if (ph_nnif_luma_ctrl_flag == 2), or is represented by using "else" other than the first case and the second case.

Exemplarily, the first syntax element identifier information (the fifth value) indicates that there is a luma component of at least one of the partitioned blocks in the current frame or the current slice that is allowed to be filtered by using the preset network model, and second syntax element identifier information of a luma component of each of the partitioned blocks is determined from the bitstream, which is represented as: 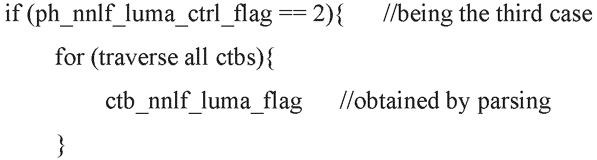 or

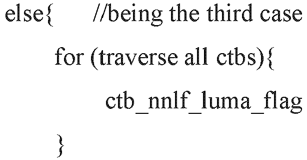

The first syntax element identifier information (the fifth value) indicates that there are chroma components of at least one of the partitioned blocks in the current frame or the current slice that are allowed to be filtered by using the preset network model, and second syntax element identifier information of chroma components of each of the partitioned blocks is determined from the bitstream, which is represented as: 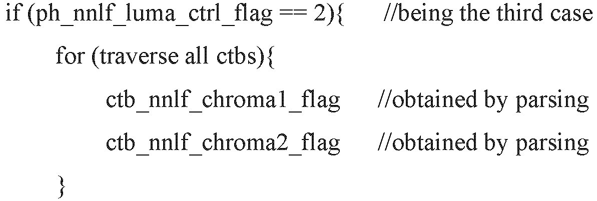 or

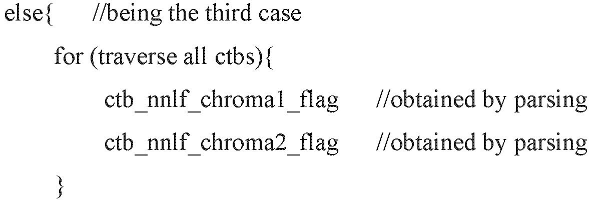

In some embodiments of the disclosure, in response to the first syntax element identifier information being the third value, it indicates that the current block for the component to-be-filtered is not filtered by using the preset network model, and a second value is assigned to the second syntax element identifier information. The second value of the second syntax element identifier information indicates that the current block is not filtered based on the preset network model.

Exemplarily, the value of the first syntax element identifier information being the third value is represented as: if (ph_nnif_luma_ctrl_flag == 0), or is represented by using "else" other than the third case and the second case.

In response to the first syntax element identifier information being the third value, it indicates that the current block for this luma component is not filtered by using the preset network model, and that a second value is assigned to second syntax element identifier information of the luma component is represented as: 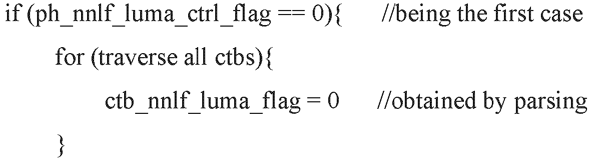 or

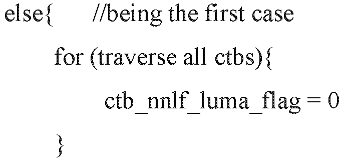

In response to the first syntax element identifier information being the third value, it indicates that the current block for these chroma components is not filtered by using the preset network model, and that a second value is assigned to second syntax element identifier information of the chroma components is represented as: 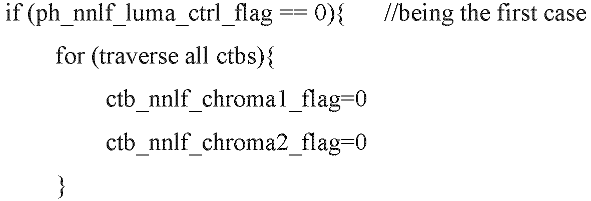 or

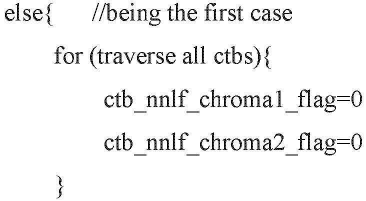

At S103, based on the second syntax element identifier information, the quantization parameter information, and the preset network model, the current block of the current frame or the current slice is filtered, to obtain a filtered and reconstructed value of the component to-be-filtered of the current block.

In an embodiment of the disclosure, the decoder may obtain a reconstructed value of the component to-be-filtered of the current block by parsing the bitstream.

It should be noted that in the decoding method in the embodiments of the disclosure, each of components to-be-filtered is decoded separately to obtain a filtered and reconstructed value of each of the components to-be-filtered. The current block of the current frame or the current slice is filtered based on the preset network model, and second syntax element identifier information, quantization parameter information and a reconstructed value of the component to-be-filtered of the current block for each of the components to-be-filtered, to obtain the filtered and reconstructed value of the component to-be-filtered of the current block.

In an embodiment of the disclosure, the preset network model may be a neural network model, and the neural network model includes at least: a convolutional layer, an activation layer, a concatenation layer, and a skip connection layer. Herein the convolutional layer may be replaced with a depthwise separable convolution, which is not limited in the embodiments of the disclosure.

In an embodiment of the disclosure, in response to the second syntax element identifier information indicating that the component to-be-filtered of the current block is filtered by using the preset network model, the reconstructed value of the component to-be-filtered and a quantization parameter corresponding to the quantization parameter index are input to the preset network model, and the current block of the current frame or the current slice is filtered to obtain the filtered and reconstructed value of the component to-be-filtered of the current block.

It should be noted that in response to the decoder determining that the current block for the component to-be-filtered is filtered by using the preset network model, the current block may be filtered to obtain the filtered and reconstructed value of the component to-be-filtered of the current block.

In some embodiments of the disclosure, based on the second syntax element identifier information, the quantization parameter information, and the preset network model, the current block of the current frame is filtered to obtain first residual information of the component to-be-filtered of the current block; and

Based on the first residual information and a reconstructed value of the component to-be-filtered of the current block, the filtered and reconstructed value of the component to-be-filtered of the current block is determined.

It should be noted that the first residual information of the component to-be-filtered is residual information corresponding to each of colour components. Based on a block-level usage flag corresponding to each of the colour components, the decoder determines a reconstructed value of the colour component of the current block. If a block-level usage flag corresponding to a colour component indicates usage, a filtered and reconstructed value corresponding to the colour component is a sum of a reconstructed value of the colour component of the current block and first residual information for the colour component outputted after filtering. If a block-level usage flag corresponding to a colour component indicates non-usage, a reconstructed value corresponding to the colour component is a filtered and reconstructed value of the colour component of the current block.

In an embodiment of the disclosure, the decoder obtains the reconstructed value of the component to-be-filtered of the current block, before filtering the current block of the current frame or the current slice based on the quantization parameter information and the preset network model to obtain the first residual information of the component to-be-filtered of the current block.

Herein, in response to second syntax element identifier information corresponding to a colour component indicating that the current block is filtered by using the preset network model, the decoder filters a reconstructed value corresponding to a colour component of the current block by using the preset network model and combining quantization parameter information, to obtain first residual information of the current block for the component to-be-filtered. Then, based on the first residual information and the reconstructed value of the colour component of the current block, the decoder determines a filtered and reconstructed value of the colour component of the current block.

In response to second syntax element identifier information corresponding to a colour component indicating that the current block is not filtered by using the preset network model, a reconstructed value corresponding to the colour component is a filtered and reconstructed value of the colour component of the current block.

In some embodiments of the disclosure, in response to the first syntax element identifier information being the third value, it indicates that the current block for the component to-be-filtered is not filtered by using the preset network model, and the second value is assigned to the second syntax element identifier information. The second value of the second syntax element identifier information indicates that the current block is not filtered based on the preset network model. In this way, after determining the reconstructed value of the component to-be-filtered of the current block, the decoder directly determines the reconstructed value of the component to-be-filtered of the current block as the filtered and reconstructed value of this component to-be-filtered of the current block.

It may be understood that during decoding, the decoder may determine a filtered and reconstructed value of each of the components to-be-filtered based on quantization parameter information corresponding to each of the components to-be-filtered. That is to say, quantization parameter information (the optimal quantization parameter information for each of the components to-be-filtered obtained by the encoder through multiple model inferences during encoding) corresponding to different components to-be-filtered of the current frame or the current slice may be different, and may be filtered separately to obtain the filtered and reconstructed value of each of the components to-be-filtered. Therefore, each of the components to-be-filtered of the current block may use its own quantization parameter information to achieve filtering for each of the components to-be-filtered in the same preset network model. Therefore, the compression performance for each of the different components to-be-filtered is improved, and the selection of input information (the quantization parameter information) for filtering of the different components to-be-filtered is more flexible without increasing the complexity of the model, thereby improving the decoding efficiency.

In some embodiments of the disclosure, new syntax elements are introduced, such as the first syntax element identifier information and the second syntax element identifier information of the component to-be-filtered. In some embodiments, components to-be-filtered include at least a luma component and chroma components. It should be noted that in the embodiments of the disclosure, the third syntax element identifier information of the component to-be-filtered may further be introduced. The third syntax element identifier information is an enable flag of the component to-be-filtered of the current frame or the current slice. The third syntax element identifier information of the component to-be-filtered of the current block is a block-level enable flag of the component to-be-filtered of the current block.

In an embodiment of the disclosure, in response to a value of the third syntax element identifier information being a first value, it is determined that the third syntax element identifier information indicates that the component to-be-filtered of the current block included in the current frame or the current slice is allowed to be filtered by using the preset network model. In response to the value of the third syntax element identifier information being a second value, it is determined that the third syntax element identifier information indicates that the component to-be-filtered of the current block included in the current frame or the current slice may be not filtered by using the preset network model.

In an embodiment of the disclosure, the first value and the second value are different. The first value and the second value may be in the form of parameters or numbers. The third syntax element identifier information may be a parameter written into a profile, or a value of a flag, which is not specifically limited herein.

In an embodiment of the disclosure, in response to the first syntax element identifier information indicating that there are components to-be-filtered of partitioned blocks in the current frame or the current slice that are allowed to be filtered by using the preset network model, the decoder may first parse the third syntax element identifier information and then parse the second syntax element identifier information. It is also possible to first parse the second syntax element identifier information, and then parse the third syntax element identifier information. No limits are made thereto in the embodiments of the disclosure.

In an embodiment of the disclosure, the process by which the decoder determines the filtered and reconstructed value of the component to-be-filtered of the current block may further include that: in response to the first syntax element identifier information indicating that there are the components to-be-filtered of the partitioned blocks in the current frame or the current slice that are allowed to be filtered by using the preset network model, and the third syntax element identifier information indicating that the component to-be-filtered of the current block included in the current frame or the current slice is allowed to be filtered by using the preset network model, the current block of the current frame or the current slice is filtered based on the quantization parameter information and the preset network model, to obtain the filtered and reconstructed value of the component to-be-filtered of the current block.

In an embodiment of the disclosure, the process by which the decoder determines the filtered and reconstructed value of the component to-be-filtered of the current block may further include that: in response to the third syntax element identifier information indicating that the component to-be-filtered of the current block included in the current frame or the current slice is allowed to be filtered by using the preset network model, and the second syntax element identifier information indicating that the component to-be-filtered of the current block is filtered by using the preset network model, the current block of the current frame or the current slice is filtered based on the quantization parameter information and the preset network model, to obtain the filtered and reconstructed value of the component to-be-filtered of the current block.

It should be noted that in response to the second syntax element identifier information indicating that the component to-be-filtered of the current block is not filtered by using the preset network model, parsing of the third syntax element identifier information may be not performed.

It should be noted that in response to the third syntax element identifier information being the first value, it may be directly determined to filter the current block without parsing the second syntax element identifier information.

In an embodiment of the disclosure, the process by which the decoder determines the filtered and reconstructed value of the component to-be-filtered of the current block may further include that: in response to the first syntax element identifier information indicating that there are the components to-be-filtered of the partitioned blocks in the current frame or the current slice that are allowed to be filtered by using the preset network model, and the third syntax element identifier information indicating that the component to-be-filtered of the current block included in the current frame or the current slice is allowed to be filtered by using the preset network model, the current block of the current frame or the current slice is filtered based on the quantization parameter information and the preset network model, to obtain the filtered and reconstructed value of the component to-be-filtered of the current block.

It should be noted that the inference time of the neural network-based in-loop filter model is relatively long, which is several times or tens of times longer than the running time of traditional codecs. Therefore, given that current hardware does not adequately support such operations, in order to control the inference time at the decoding end, the usage scope of the current frame or the current slice may be limited, for example, the usage of coding tree units or partitioned blocks that contribute significantly to performance improvement, thereby greatly reducing decoding time. Herein it may be necessary to introduce additional block-level syntax element identifier information, such as the third syntax element identifier information.

In some embodiments of the disclosure, before the decoder filters the current block of the current frame or the current slice based on the second syntax element identifier information, the quantization parameter index, and the preset network model, to obtain the filtered and reconstructed value of the component to-be-filtered of the current block, the decoder obtains: a reconstructed value of the component to-be-filtered of the current block, and at least one of a prediction value of the component to-be-filtered of the current block, block partition information, and a deblocking filtering boundary strength.

In some embodiments of the disclosure, the decoder filters the reconstructed value of the component to-be-filtered of the current block by using the preset network model and combining the quantization parameter information and at least one of the prediction value of the component to-be-filtered of the current block, the block partition information, and the deblocking filtering boundary strength, to obtain the filtered and reconstructed value of the component to-be-filtered of the current block.

That is to say, the decoder obtains the reconstructed value of the component to-be-filtered of the current block and at least one of the prediction value of the component to-be-filtered of the current block, the block partition information of the component to-be-filtered, and the deblocking filtering boundary strength. It should be noted that during the filtering process, input parameters that are input to the network filtering model may include: for each of the components to-be-filtered, a prediction value of the current block, block partition information, a deblocking filtering boundary strength, and a reconstructed value of the current block; and the quantization parameter information in the disclosure. Types of input parameter information for filtering each of the components to-be-filtered are not limited in the disclosure. However, the prediction value of the current block, the block partition information, and the deblocking filtering boundary strength for each of the components to-be-filtered may not be required every time, and need to be determined based on the actual situation.

It may be understood that the input parameters of the decoder during filtering may be different, thereby improving the diversity of operations during filtering. The inputs of the preset network model may include a reconstructed value (represented by rec_yuv) of the component to-be-filtered, and quantization parameter information of a luma component or quantization parameter information of chroma components. The output of the preset network model may be a filtered and reconstructed value (represented by output_yuv) of the component to-be-filtered. Due to the removal of non-essential input elements such as predicted YUV information and YUV information with partition information in the embodiments of the disclosure, the computational load of network model inferences can be reduced, which is beneficial for the implementation at the decoding end and for reducing decoding time. Furthermore, in an embodiment of the disclosure, the inputs of the preset network model may further include quantization parameter information of a luma component, which may include SliceQP or BaseQP; and quantization parameter information of chroma components, which may include SliceQP or BaseQP, which is determined by parsing the bitstream.

In an embodiment of the disclosure, through the above implementations, respective filtered and reconstructed value of each of the components to-be-filtered of the current block may be determined based on respective quantization parameter information corresponding to each of the components to-be-filtered. That is, all components to-be-filtered of the current block are traversed, and for each of all components to-be-filtered sequentially, the operations of parsing the bitstream and determining the filtered and reconstructed value of the component to-be-filtered of the current block are repeatedly performed, to obtain a respective filtered and reconstructed value of each component to-be-filtered. Herein each component to-be-filtered corresponds to respective quantization parameter information. In this way, a filtered and reconstructed value of the current block can be determined based on the respective filtered and reconstructed values of all components to-be-filtered of the current block.

It should be noted that the filtered and reconstructed value of the current block may be determined by merging the different components to-be-filtered with the respective filtered and reconstructed values of all components to-be-filtered of the current block.

In some embodiments of the disclosure, in response to the decoder determining the filtered and reconstructed value of each of the components to-be-filtered of the current block, the decoder traverses each of the partitioned blocks in the current frame or the current slice, sequentially takes each of the partitioned blocks as the current block, and repeatedly performs the operations of parsing the bitstream and determining the filtered and reconstructed value of the component to-be-filtered of the current block, to obtain a respective filtered and reconstructed value of each component to-be-filtered for each of the partitioned blocks. The decoder determines a respective filtered and reconstructed value of each of the partitioned blocks based on the respective filtered and reconstructed value of each of the components to-be-filtered for each of the partitioned blocks, thereby determining a reconstructed picture of the current frame or the current slice based on the respective filtered and reconstructed values of all of the partitioned blocks.

It should be noted that the current frame or the current slice may include many partitioned blocks. Then, these partitioned blocks are traversed, each of the partitioned blocks is taken as the current block sequentially, and the process of the decoding method in the embodiments of the disclosure is repeatedly performed, to obtain a respective filtered and reconstructed value for each of the partitioned blocks. Based on these obtained filtered and reconstructed values, the reconstructed picture of the current frame can be determined. Furthermore, it should be noted that the decoder may further continue to traverse other in-loop filter tools and, upon completion, output the complete reconstructed picture, its specific process is not closely related to the embodiments of the disclosure, thus it is not detailed herein.

In some embodiments of the disclosure, in response to the first syntax element identifier information indicating that there are the components to-be-filtered of the partitioned blocks in the current frame or the current slice that are allowed to be filtered by using the preset network model, and the current frame or the current slice being a first type frame, the quantization parameter information of the component to-be-filtered and the second syntax element identifier information are determined.

It should be noted that the first type frame may include an I-frame or a bottom-layer B-frame.

In some embodiments, since the inference time of the neural network-based in-loop filter model is relatively long, which is several times or tens of times longer than the running time of traditional codecs, given that current hardware does not adequately support such operations, in order to control the inference time at the decoding end, this technology is not used for, e.g., I-frames or bottom-layer B-frames. This not only reduces the decoding time, but also saves the bit overhead of quantization parameter transmission for I-frames and B-frames, thereby further improving the compression efficiency.

An embodiment of the disclosure provides a filtering method, applied to an encoder, which is illustrated in FIG. 9 and may include the following operations S201 to S204.

At S201, a first rate-distortion cost of a current frame or a current slice is determined; herein the first rate-distortion cost is obtained in case that components to-be-filtered of all of partitioned blocks included in the current frame or the current slice are not filtered by using a preset network model.

In an embodiment of the disclosure, the encoder performs intra prediction or inter prediction across blocks to obtain a prediction block of each of the blocks. A residual of each of the blocks may be obtained by subtracting the prediction block of the block from an original picture block of the block. Various transform modes are applied to the residual to obtain a frequency-domain residual coefficient. After performing quantization and inverse quantization, and then inverse transform on the frequency-domain residual coefficient, distorted residual information is obtained. The distorted residual information is added to the prediction block to obtain a reconstructed block of a current block. After encoding a picture, an in-loop filter module filters the picture at a block-level (e.g., a coding tree unit-level) as a basic unit. A coding tree unit may be described as a block in the embodiments of the disclosure, but the block is not limited to a CTU, and may also be a CU or TU, which is not limited in the embodiments of the disclosure. The encoder obtains preset network model-based fourth syntax element identifier information, that is, a sequence-level enable flag, i.e., sps_nnlf_enable_flag. If the sequence-level enable flag represents allowance, the neural network-based in-loop filter technology is allowed to be used. If the sequence-level enable flag represents disallowance, the neural network-based in-loop filter technology is not allowed to be used. The sequence-level enable flag needs to be signalled into a bitstream when encoding a video sequence.

In an embodiment of the disclosure, the fourth syntax element identifier information (i.e., the sequence-level enable flag) is determined. In response to the sequence-level enable flag representing allowance, the encoder attempts the preset network mode-based in-loop filter technology, and the encoder obtains, for each of components to-be-filtered, an original value of the current block in the current frame or the current slice, a reconstructed value of the current block, and quantization parameter information. In response to the preset network mode-based sequence-level enable flag representing disallowance, the encoder does not attempt the network-based in-loop filter technology, and continues to attempt other in-loop filter tools such as LF filtering and, upon completion, outputs a complete reconstructed picture.

In an embodiment of the disclosure, in response to the obtained fourth syntax element identifier information indicating that a sequence including the current frame or the current slice is allowed to be filtered by using the preset network model, a respective original value of each of the partitioned blocks, a respective reconstructed value of each of the partitioned blocks, and original quantization parameter information are obtained for the component to-be-filtered of the current frame or the current slice.

In some embodiments of the disclosure, the components to-be-filtered of all partitioned blocks included in the current frame or the current slice are not filtered by using the preset network model, and a first model inference is performed (i.e., a first case). In this way, the encoder performs a rate-distortion cost calculation based on the original values of all of the partitioned blocks and the reconstructed values of all of the partitioned blocks, to determine a rate-distortion cost of each of the components to-be-filtered of the current frame or the current slice; and determines the first rate-distortion cost (frame-level cost or slice-level cost) of the current frame or the current slice based on a sum of the rate-distortion costs of all of the components to-be-filtered.

It should be noted that in an embodiment of the disclosure, the component to-be-filtered may refer to a colour component. In response to a video component herein being a colour component, that is, the component to-be-filtered may be a colour component, a frame-level switch flag or a slice-level switch flag may further indicate whether all of the blocks for the current colour component (the component to-be-filtered) are filtered by using the neural network-based in-loop filter technology.

Herein the colour component may include at least one of: a first colour component, a second colour component, and a third colour component. Herein the first colour component may be a luma component, and the second colour component and the third colour component may be chroma components (e.g., the second colour component is a blue chroma component and the third colour component is a red chroma component; or the second colour component is a red chroma component and the third colour component is a blue chroma component).

In an embodiment of the disclosure, the encoder performs a rate-distortion cost calculation based on the original values of all of the partitioned blocks and the reconstructed values of all of the partitioned blocks for a luma component, to determine a frame-level rate-distortion cost or a slice-level rate-distortion cost of the luma component of the current frame or the current slice. The encoder performs a rate-distortion cost calculation based on the original values of all of the partitioned blocks and the reconstructed values of all of the partitioned blocks for two chroma components, to determine frame-level rate-distortion costs or slice-level rate-distortion costs of the two chroma components of the current frame or the current slice. Based on the frame-level rate-distortion cost or the slice-level rate-distortion cost of the luma component, and the frame-level rate-distortion costs or the slice-level rate-distortion costs of the two chroma components, The encoder determines the first rate-distortion cost of the current frame or the current slice.

It should be noted that the fourth syntax element identifier information (sps_nnlf_enable _flag) is determined by a value of the sequence-level enable flag obtained from decoding. In some embodiments, the encoder may obtain the value of the fourth syntax element identifier information and signal the fourth syntax element identifier information into a bitstream.

In some embodiments of the disclosure, in response to the value of the fourth syntax element identifier information being a first value, it is determined that the fourth syntax element identifier information indicates that a filtering function is enabled for a video sequence to-be-processed, that is, the sequence-level enable flag represents allowance. In response to the value of the fourth syntax element identifier information being a second value, it is determined that the fourth syntax element identifier information indicates that the filtering function is disabled for the video sequence to-be-processed, that is, the sequence-level enable flag represents disallowance.

In an embodiment of the disclosure, the first value and the second value are different. The first value and the second value may be in the form of parameters or numbers. Specifically, the fourth syntax element identifier information may be a parameter written into a profile, or a value of a flag, which is not specifically limited herein.

Exemplarily, taking the flag as an example, there are two ways to set the flag: enable flag (enable _flag) and disable flag (disable _flag). Assuming that the value of the enable _flag is a first value and the value of the disable _flag is a second value, the first value may be set to 1, and the second value may be set to 0; or the first value may be set to true, and the second value may be set to false. However, no specific limits are made thereto in the embodiments of the disclosure.

In an embodiment of the disclosure, in response to the fourth syntax element identifier information indicating that a sequence including the current frame or the current slice is allowed to be filtered by using the preset network model, that is, the value of the fourth syntax element identifier information being the first value, a bitstream is parsed, and first syntax element identifier information of the component to-be-filtered of the current block is determined. Herein the fourth syntax element identifier information is used for determining whether each block in the current frame or the current slice is filtered based on the preset network model.

It should be noted that in an embodiment of the disclosure, the video sequence to-be-processed may be first partitioned into slices to obtain multiple slices. Then, each of the multiple slices is further partitioned. When the encoder encodes at the frame-level or slice-level, the encoding method according to the embodiments of the disclosure may be adopted.

Exemplarily, costOrg is used to represent the first rate-distortion cost obtained in case that the components to-be-filtered of all of the partitioned blocks included in the current frame or the current slice are not filtered by using the preset network model. It should be noted that costOrg may be obtained by summing the rate-distortion costs of different components to-be-filtered.

In some embodiments of the disclosure, in response to the fourth syntax element identifier information indicating that the sequence including the current frame or the current slice is allowed to be filtered by using the preset network model, and the current frame or the current slice being a first type frame, the first rate-distortion cost, second rate-distortion cost, and third rate-distortion cost in the above encoding method are determined.

It should be noted that the first type frame may include an I-frame or a bottom-layer B-frame.

In some embodiments, since the inference time of the neural network-based in-loop filter model is relatively long, which is several times or tens of times longer than the running time of traditional codecs, given that current hardware does not adequately support such operations, in order to control the inference time of the encoding end, this technology is not used for, e.g., I-frames or bottom-layer B-frames. This not only reduces the encoding time, but also saves the bit overhead of quantization parameter transmission for I-frames and B-frames, thereby further improving the compression efficiency.

At S202, a second rate-distortion cost of the current frame or the current slice is determined; herein the second rate-distortion cost is obtained in case that the components to-be-filtered of all of the partitioned blocks included in the current frame or the current slice are filtered by using the preset network model.

In an embodiment of the disclosure, the components to-be-filtered of all partitioned blocks included in the current frame or the current slice are filtered by using the preset network model, and a second model inference is performed (i.e. a second case) to determine the second rate-distortion cost of the current frame or the current slice.

In some embodiments of the disclosure, the encoder determines at least two types of original quantization parameter information from the original quantization parameter information. For each type of the at least two types of original quantization parameter information, the encoder filters, based on the preset network model, the respective reconstructed value of the component to-be-filtered of each of the partitioned blocks included in the current frame or the current slice and the type of original quantization parameter information, to obtain a respective original filtered and reconstructed value of the component to-be-filtered of each of the partitioned blocks included in the current frame or the current slice. The encoder performs a rate-distortion cost calculation based on the original values of the components to-be-filtered of all of the partitioned blocks included in the current frame or the current slice and the original filtered and reconstructed values of the components to-be-filtered of all of the partitioned blocks, to obtain a fourth rate-distortion cost of a component to-be-filtered for each type of original quantization parameter information. The encoder determines, from at least two of the obtained fourth rate-distortion costs, a third minimum rate-distortion cost that has a lowest rate-distortion cost. The encoder determines the second rate-distortion cost based on the respective third minimum rate-distortion costs of all components to-be-filtered.

In an embodiment of the disclosure, the original quantization parameter information may include at least two types of original quantization parameters, such as SliceQP or BaseQP, or other forms of quantization parameters. During the second model inference process, the encoder may use each type of the at least two types of original quantization parameters to perform at least two model inferences for each of components to-be-filtered, i.e., each of colour components, and obtain corresponding fourth rate-distortion cost for the type of original quantization parameter. In this way, for each of the components to-be-filtered (each of the colour components), at least two fourth rate-distortion costs corresponding to the at least two types of original quantization parameter information may be obtained in the second model inference process. For each of the components to-be-filtered (each of the colour components), a third minimum rate-distortion cost that has a lowest rate-distortion cost is determined from the at least two fourth rate-distortion costs, thereby obtaining a third minimum rate-distortion cost for each of the components to-be-filtered. The third minimum rate-distortion costs of different components to-be-filtered are summed to obtain a second rate-distortion cost. For the different components to-be-filtered, original quantization parameters corresponding to their second rate-distortion costs are different. That is to say, during the second inference process, the optimal original quantization parameters to be used for filtering with the preset network model may be different for different components to-be-filtered.

It should be noted that the second rate-distortion cost is a frame-level cost or a slice-level cost, which is determined by the encoder as the sum of the third minimum rate-distortion costs of the components to-be-filtered of the current frame or the current slice.

Exemplarily, for a luma component, such as the Y component, rate-distortion costs corresponding to the two types of original quantization parameters are represented as costYcand1 and costYcand2, respectively. A smaller one between costYcand1 and costYcand2 is determined as a third minimum rate-distortion cost for the Y component. A second rate-distortion cost may be represented as costFrameBest.

At S203, a third rate-distortion cost of the current frame or the current slice is determined; herein the third rate-distortion cost is obtained in case that there is a component to-be-filtered of at least one of the partitioned blocks in the current frame or the current slice that is allowed to be filtered by using the preset network model, and the at least one of the partitioned blocks is part of the partitioned blocks in the current frame or the current slice.

In an embodiment of the disclosure, in response to obtaining the first rate-distortion cost, the encoder may determine a first sub-rate-distortion cost of the component to-be-filtered for each of the partitioned blocks. In response to obtaining the second rate-distortion cost, the encoder determines a second sub-rate-distortion cost of the component to-be-filtered for each of the partitioned blocks. Based on the first sub-rate-distortion cost and the second sub-rate-distortion cost, the encoder determines a first minimum rate-distortion cost of the component to-be-filtered of the current frame or the current slice. Based on the first minimum rate-distortion costs of all of the components to-be-filtered, the encoder determines the third rate-distortion cost (i.e., a third rate-distortion cost in a third case).

In an embodiment of the disclosure, during the first model inference, the encoder obtains a block-level rate-distortion cost (i.e., the first sub-rate-distortion cost) of each of the blocks for different components to-be-filtered. During the second model inference, the encoder obtains a block-level rate-distortion cost (i.e., the second sub-rate-distortion cost) of each of the blocks with the optimal original quantization parameter information for different components to-be-filtered. For a third case, for each of the blocks for different components to-be-filtered, a first sub-rate-distortion cost corresponding to the block and a second sub-rate-distortion cost corresponding to the block are compared to determine a first minimum rate-distortion cost (i.e., a block-level rate-distortion cost) that has a lowest rate-distortion cost for each of the components to-be-filtered. In this way, the first minimum rate-distortion cost that has the lowest rate-distortion cost for each of the blocks in the first model inference and the second model inference is obtained. Then, the first minimum rate-distortion costs of each of the blocks for different components to-be-filtered are added up or summed, to obtain the third rate-distortion cost of the current frame or the current slice.

In an embodiment of the disclosure, the encoder traverses all of the components to-be-filtered, and determines a sum of the first minimum rate distortion costs of all of the partitioned blocks as the third rate-distortion cost of the current frame or the current slice.

Exemplarily, during the first model inference process, the block-level rate-distortion cost (i.e., the first sub-rate-distortion cost) of the component to-be-filtered may be represented as costCTUrec, e.g., costCTUrec of the luma component and costCTUrec of the chroma component. During the second model inference process, the block-level rate-distortion cost (i.e. the second sub-rate-distortion cost) of the component to-be-filtered may be represented as costCTUcnn, e.g., costCTUcnn of the luma component and costCTUcnn of the chroma component.

In an embodiment of the disclosure, for each of the components to-be-filtered: in response to a first sub-rate-distortion cost for one of the partitioned blocks being less than a second sub-rate-distortion cost for the partitioned block, it is determined that second syntax element identifier information of the component to-be-filtered of the partitioned block is to be a second value, herein the second value indicates that the partitioned block is not allowed to be filtered by using the preset network model; and in response to the first sub-rate-distortion cost for one of the partitioned blocks being greater than or equal to the second sub-rate-distortion cost for the partitioned block, it is determined that the second syntax element identifier information of the component to-be-filtered of the partitioned block is to be a first value, herein the first value indicates that the partitioned block is allowed to be filtered by using the preset network model.

In an embodiment of the disclosure, for each of the components to-be-filtered, in response to the first sub-rate-distortion cost for one of the partitioned blocks being less than the second sub-rate-distortion cost for the partitioned block, it indicates that the encoding performance of the block is better when the block is not filtered than when the block is filtered; and thus, it is determined that for the component to-be-filtered, the block is not filtered by using the preset network model, and the block-level usage flag is set to the second value, i.e., false or no. For one of the partitioned blocks, in response to the first sub-rate-distortion cost for the partitioned block being greater than or equal to the second sub-rate-distortion cost for the partitioned block, it indicates that the encoding performance of the block is better when the block is filtered than when the block is not filtered; and thus, it is determined that for the component to-be-filtered, the block is filtered by using the preset network model, and the block-level usage flag is set to the first value, i.e., true. The block-level usage flag for each of the blocks is determined for each of the partitioned blocks according to the above principle.

Exemplarily, after the encoder determines the first minimum rate-distortion cost of each block for each of the components to-be-filtered, all of the components to-be-filtered and the first minimum rate-distortion costs of all of the blocks are traversed to obtain the third rate-distortion cost (the frame-level rate-distortion cost or the slice-level rate-distortion cost). The third rate-distortion cost may be represented as costCTUBest.

It should be noted that the third rate-distortion cost determined in the third case is obtained in case that a part of the blocks is filtered and another part of the blocks is not filtered. That is, the third case is the case that part of the partitioned blocks in the current frame or the current slice is filtered.

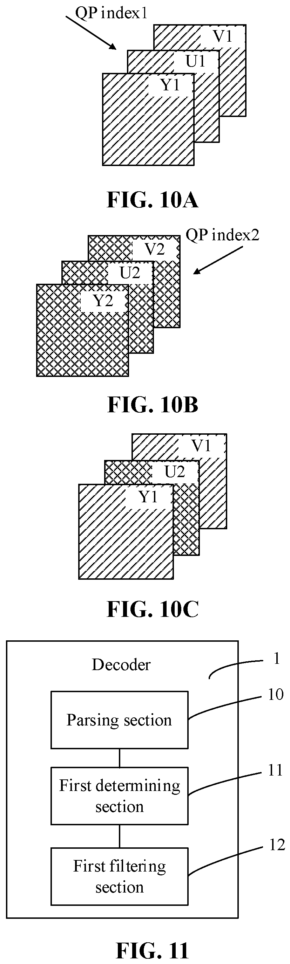

Exemplarily, as illustrated in FIG. 10A and FIG. 10B, using quantization parameters QP1 and QP2 respectively corresponding to QP index 1 and QP index 2, the Y, U, and V components of the current block are traversed, and first sub-rate-distortion costs CostY1, CostU1, and CostV1 respectively corresponding to Y1, U1, and V1 components are obtained, and second sub-rate-distortion costs CostY2, CostU2, and CostV2 respectively corresponding to Y2, U2, and V2 components are determined. Comparing the first sub-rate-distortion costs and the second sub-rate-distortion costs, it is determined that CostY1 is less than CostY2, CostU1 is greater than CostU2, and CostV1 is less than CostV2. Therefore, the obtained quantization parameter information corresponding to each of the colour components of the current block is quantization parameter information for CostY1, CostU2, and CostV1 as illustrated in FIG. 10C.

At S204, based on the first rate-distortion cost, the second rate-distortion cost, and the third rate-distortion cost, first syntax element identifier information of a component to-be-filtered of the current frame or the current slice is determined.

In an embodiment of the disclosure, the encoder determines a second minimum rate-distortion cost that has a lowest rate-distortion cost based on the first rate-distortion cost, the second rate-distortion cost, and the third rate-distortion cost. Based on the second minimum rate-distortion cost, the first syntax element identifier information of the current frame or the current slice may be determined. Consequently, the value of the first syntax element identifier information of each of the components to-be-filtered is consistent with the value of the first syntax element identifier information of the current frame or the current slice, and the first syntax element identifier information of the component to-be-filtered of the current frame or the current slice is obtained.

In an embodiment of the disclosure, after determining the first syntax element identifier information of the component to-be-filtered, the encoder will ultimately signal the first syntax element identifier information of the component to-be-filtered into a bitstream and transmit the bitstream to the decoder for decoding.

In an embodiment of the disclosure, the process by which the encoder determines, based on the first rate-distortion cost, the second rate-distortion cost, and the third rate-distortion cost, the first syntax element identifier information of the component to-be-filtered of the current frame or the current slice includes the following operations.

A second minimum rate-distortion cost that has a lowest rate-distortion cost is determined from the first rate-distortion cost, the second rate-distortion cost, and the third rate-distortion cost.

In response to the second minimum rate-distortion cost being the first rate-distortion cost, it is determined that the first syntax element identifier information of the component to-be-filtered of the current frame or the current slice is to be a third value.

In response to the second minimum rate-distortion cost being the second rate-distortion cost, it is determined that the first syntax element identifier information of the component to-be-filtered of the current frame or the current slice is to be a fourth value.

In response to the second minimum rate-distortion cost being the third rate-distortion cost, it is determined that the first syntax element identifier information of the component to-be-filtered of the current frame or the current slice is to be a fifth value.

It should be noted that for the first case, the second case, and the third case mentioned above, the encoder determines which case has the lowest frame-level rate-distortion cost or slice-level rate-distortion cost. Then, the value from that case is determined as the value of the first syntax element identifier information of the component to-be-filtered of the current frame or the current slice.

In an embodiment of the disclosure, the value of the first syntax element identifier information has the following three cases. The first case is that the current frame or the current slice is not allowed to be filtered by using the preset network model. The second case is that all of the partitioned blocks in the current frame or the current slice are allowed to be filtered by using the preset network model. The third case is that part of the partitioned blocks in the current frame or the current slice is allowed to be filtered by using the preset network model. For the three different cases mentioned above, the encoder may use three different values to represent these three cases, with each value corresponding to a respective case.

In an embodiment of the disclosure, the first case is represented by a third value, the second case is represented by a fourth value, and the third case is represented by a fifth value. Exemplarily, the third value may be 0, the fourth value may be 1, and the fifth value may be 2. The setting way of the third value to the fifth value is not limited in the embodiments of the disclosure.

In some embodiments of the disclosure, in response to determining that the first syntax element identifier information of the component to-be-filtered of the current frame or the current slice being the fifth value, the encoder signals the second syntax element identifier information of each of the partitioned blocks into a bitstream.

It should be noted that in response to determining that the first syntax element identifier information of the component to-be-filtered of the current frame or the current slice being the fifth value, that is, in response to determining that part of the partitioned blocks in the current frame or the current slice is allowed to be filtered by using the preset network model, the encoder needs to signal the second syntax element identifier information (i.e., a block-level usage flag) corresponding to each of the partitioned blocks in the current frame or the current slice into a bitstream and transmit the bitstream to the decoder for decoding.

In some embodiments of the disclosure, in response to a second minimum rate-distortion cost being the second rate-distortion cost or the third rate-distortion cost, a type of original quantization parameter information for the second rate-distortion cost or the third rate-distortion cost is determined as quantization parameter information of the component to-be-filtered, and the quantization parameter information is signalled into a bitstream; or a quantization parameter index for the quantization parameter information is signalled into a bitstream.

It should be noted that for the second case and the third case, the encoder needs to take respective original quantization parameter information for each of the components to-be-filtered corresponding to the obtained second rate-distortion cost or third rate-distortion cost as the input for filtering. That is, the encoder determines the respective original quantization parameter information for each of the components to-be-filtered corresponding to the obtained second rate-distortion cost or third rate-distortion cost as the quantization parameter information of the component to-be-filtered; and signals the quantization parameter information into a bitstream and transmit the bitstream to the decoder for use during decoding. Alternatively, the encoder signals an index corresponding to the quantization parameter information of the component to-be-filtered into a bitstream and transmits the bitstream to the decoder for use during decoding, which is not limited in the embodiments of the disclosure.

At the same time, in the embodiment of the disclosure, in response to a second minimum rate-distortion cost being the second rate-distortion cost or the third rate-distortion cost, a respective original filtered and reconstructed value of each of the partitioned blocks for the second rate-distortion cost or the third rate-distortion cost is determined as a filtered and reconstructed value of a component to-be-filtered of the partitioned block, and the filtered and reconstructed values are signalled into a bitstream.

It may be understood that during the encoding process, the encoder determines an encoding approach with a lowest frame-level rate-distortion cost or a lowest slice-level rate-distortion cost through multiple model inferences, considering cases that none of the partitioned blocks are filtered, all of the partitioned blocks are filtered, and part of the partitioned blocks is filtered. Quantization parameter information corresponding to each of the components to-be-filtered may be different types of quantization parameter information in different cases. That is to say, quantization parameter information (the optimal quantization parameter information of each of the components to-be-filtered obtained by the encoder through multiple model inferences during encoding) corresponding to different components to-be-filtered of the current frame or the current slice may be different, and may be filtered separately to obtain a filtered and reconstructed value of each of the components to-be-filtered. Therefore, for each of the components to-be-filtered of the current block, its own quantization parameter information may be used to perform filtering on the component to-be-filtered in the same preset network model. Therefore, the compression performance for each of the components to-be-filtered is improved, and the selection of input information (the quantization parameter information) for filtering of different components to-be-filtered is more flexible without increasing the complexity of the model, thereby improving the encoding efficiency.

In some embodiments of the disclosure, in response to obtained fourth syntax element identifier information indicating that a sequence including the current frame or the current slice is allowed to be filtered by using the preset network model, a respective reconstructed value of each of the partitioned blocks and original quantization parameter information are obtained for the component to-be-filtered of the current frame or the current slice; and at least one of: a respective prediction value of each of the partitioned blocks for the component to-be-filtered of the current frame or the current slice, block partition information, and a deblocking filtering boundary strength is obtained. At least two types of original quantization parameter information are determined from the original quantization parameter information.

For each type of the at least two types of original quantization parameter information, the respective reconstructed values of all of the partitioned blocks, the type of original quantization parameter information, and at least one of the respective prediction values of all of the partitioned blocks, the block partition information, and the deblocking filtering boundary strength are input into the preset network model for filtering, to obtain a respective original filtered and reconstructed value of each of the partitioned blocks for the component to-be-filtered.

A rate-distortion cost calculation is performed based on original values of the components to-be-filtered of all of the partitioned blocks included in the current frame and the original filtered and reconstructed values of the components to-be-filtered of all of the partitioned blocks, to obtain a fourth rate-distortion cost of the component to-be-filtered for each type of original quantization parameter information.

A third minimum rate-distortion cost that has a lowest rate-distortion cost is determined from the obtained at least two of the fourth rate-distortion costs.

The second rate-distortion cost is determined based on the third minimum rate-distortion costs of all of the components to-be-filtered.

It should be noted that this implementation process is consistent with the implementation principle in S202. The difference is that the input parameters during filtering are diversified. That is, the input parameters include the respective reconstructed value of each of the partitioned blocks and the original quantization parameter information for the component to-be-filtered of the current frame or the current slice, and at least one of: the respective prediction value of each of the partitioned blocks for the component to-be-filtered, the block partition information, and the deblocking filtering boundary strength.

It may be understood that the input parameters of the encoder during filtering may be different, thereby improving the diversity of operations during filtering. The inputs of the preset network model may include a reconstructed value (represented by rec_yuv) of the component to-be-filtered, and quantization parameter information of a luma component or quantization parameter information of chroma components. The output of the preset network model may be a filtered and reconstructed value (represented by output_yuv) of the component to-be-filtered. Due to the removal of non-essential input elements such as predicted YUV information and YUV information with partition information in the embodiments of the disclosure, the computational load of network model inferences can be reduced, which is beneficial for the implementation at the encoding end and for reducing encoding time.

In some embodiments of the disclosure, the encoder may further determine third syntax element identifier information. The third syntax element identifier information is used for indicating that the component to-be-filtered of the current block is allowed to be filtered by using the preset network model. Then, the encoder may signal the third syntax element identifier information into a bitstream.

Herein the third syntax element identifier information of the component to-be-filtered of the current block is a block-level enable flag of the component to-be-filtered of the current block.

In an embodiment of the disclosure, in response to a value of the third syntax element identifier information being a first value, it is determined that the third syntax element identifier information indicates that the component to-be-filtered of the current block included in the current frame or the current slice is allowed to be filtered by using the preset network model. In response to the value of the third syntax element identifier information being a second value, it is determined that the third syntax element identifier information indicates that the component to-be-filtered of the current block included in the current frame or the current slice may not be filtered by using the preset network model.

In an embodiment of the disclosure, the first value and the second value are different. The first value and the second value may be in the form of parameters or numbers. The third syntax element identifier information may be a parameter written into a profile, or a value of a flag, which is not specifically limited herein.

It should be noted that in response to the second syntax element identifier information being a first value, the third syntax element identifier information is the first value. In response to the second syntax element identifier information being a second value, the third syntax element identifier information may be the first value, and may be the second value. In response to the third syntax element identifier information being the second value, the second syntax element identifier information is the second value.

It should be noted that the inference time of the neural network-based in-loop filter model is relatively long, which is several times or tens of times longer than the running time of traditional codecs. Therefore, given that current hardware does not adequately support such operations, in order to control the inference time of the encoding end, the usage scope of the current frame or the current slice may be limited, for example, the usage of coding tree units or partitioned blocks that contribute significantly to performance improvement, thereby greatly reducing encoding time. Herein it may be necessary to introduce additional block-level syntax element identifier information, such as the third syntax element identifier information.

In another embodiment of the disclosure, based on the decoding method and the encoding method described in the above mentioned embodiments, taking three colour components (i.e., YUV) as an example, the embodiment of the disclosure proposes a scheme of multiple inferences with the same model to adapt to the demand of quantization parameters (quantization parameter information) for different colour components. Taking the neural network model illustrated in FIG. 5A as an example of the preset network model, for a type of quantization parameters, i.e., BaseQP or sliceQP, the neural network filtering model outputs filtered results for the three YUV colour components in the inference stage. For another different type of the quantization parameters, i.e., the other one in BaseQP or sliceQP, the preset network model performs inference on the current picture again to obtain another set of filtered results of the three YUV colour components. The rate-distortion cost is used to compare the filtered results of the three YUV components for different quantization parameters, the best result of each of the colour components is selected as the output of the neural network filtering model.

The encoding end may perform the selection of multiple quantization parameters. For each type of quantization parameter, the coding tree unit or the coding unit (a basic unit for neural network in-loop filter, i.e., a partitioned block) is used to perform inference to calculate a filtered and reconstructed sample block. After inferences for all of the quantization parameters are completed, the optimal quantization parameter of the current colour component is selected based on a rate-distortion cost at a coding tree unit-level (CTB-level), a frame-level, or a slice-level. The selected optimal quantization parameter of the current colour component is signalled into, through a quantization parameter index or by direct binarization, a bitstream for transmission to the decoding end.

The decoding end parses the quantization parameter information at the current CTB-level, the frame-level, or the slice-level, and uses the neural network-based in-loop filter technology to perform filtering based on all quantization parameters obtained from parsing, to obtain a respective filtering result. Based on the quantization parameter information identified for each of the colour components, the respective result is used to replace a reconstructed sample as the output sample of the current neural network-based in-loop filter technology.

Exemplarily, in a specific embodiment, a specific process for the encoding end is as follows.

The encoder performs intra prediction or inter prediction across coding units, to obtain a prediction block of each of the coding units. A residual of each of the coding units may be obtained by subtracting the prediction block of the coding unit from an original picture block of the coding unit. Various transform modes are applied to the residual to obtain a frequency-domain residual coefficient. After performing quantization and inverse quantization, and then inverse transform on the frequency-domain residual coefficient, distorted residual information is obtained. The distorted residual information is added to the prediction block to obtain a reconstructed block. After encoding a picture, an in-loop filter module filters the encoded picture at a coding tree unit-level as a basic unit, and the technology proposed in the disclosure is applied herein. A neural network-based in-loop filter enable flag (i.e., sps_nnlf_enable_flag, a sequence-level enable flag) is obtained. In response to the flag being true, the neural network-based in-loop filter technology is allowed to be used. In response to the flag being false or no, the neural network-based in-loop filter technology is not allowed to be used. The sequence-level enable flag needs to be signalled into a bitstream when encoding a video sequence.

At operation 1: in response to an enable flag for the neural network model-based in-loop filtering being true, the encoding end attempts to use the neural network model-based in-loop filter technology, and proceeds to operation 2; and in response to an enable flag for the neural network model-based in-loop filtering being false, the encoding end does not attempt to use the neural network model-based in-loop filter technology, and skips operation 2 and directly proceeds to operation 3.

At operation 2: the neural network-based in-loop filter technology is initialized, and a neural network model applicable to the current frame is loaded.

### For a first round:

The encoding end calculates cost information without using the neural network model-based in-loop filter technology. That is, the encoder uses reconstructed samples of coding tree units and original picture samples of the coding tree units, which are prepared as inputs of the neural network model, to calculate a rate-distortion cost (a first rate-distortion cost), denoted as costOrg.

### For a second round:

The encoding end attempts to use the neural network-based in-loop filter technology, traverses two types of quantization parameter candidates respectively, and inputs reconstructed YUV samples, predicted YUV samples, a current frame type, and quantization parameters of the current coding tree unit into a loaded preset network model for inference. The neural network-based in-loop filter model outputs a reconstructed sample block of the current coding tree unit, and completes the filtering of the current frame or the current slice. Three YUV colour components are traversed. For example, for the Y component, rate-distortion costs corresponding to the two types of quantization parameters are costYcand1 and costYcand2, respectively, to obtain two rate-distortion costs of each of the colour components. For each of the colour components, a reconstructed sample (a filtered result) with a lowest cost is selected as a filtered and reconstructed sample of the Y component of the current frame, and a quantization parameter index (nnlf luma qp index) corresponding to the Y component is recorded. After traversing the three colour components and determining the corresponding quantization parameter for each of the three colour components, a total rate-distortion cost sum for the three colour components is calculated and is denoted as costFrameBest.

### For a third round:

The encoding end attempts to optimize the selection at the coding tree unit level. In the second round, the encoding end defaults to using the neural network-based in-loop filter technology for all of coding tree units in the current frame, with separate frame-level switch flags for luma and chroma to control the usage, while the coding tree unit level does not require transmission of the usage flag. In this round, combinations of coding tree unit level switch flags are attempted, and each of the components may be individually controlled. The encoder traverses coding tree units, calculates a rate-distortion cost (denoted as costCTUrec) based on a reconstructed sample without using the neural network-based in-loop filter and an original sample of the current coding tree unit, and calculates a rate-distortion cost (denoted as costCTUcnn) based on a reconstructed sample with using the neural network-based in-loop filter and the original sample of the current coding tree unit.

For a luma component, in response to costCTUrec of a current luma component being smaller than costCTUcnn of the luma component, a coding tree unit level usage flag (ctb_nnlf_luma_flag) of the luma component for the neural network-based in-loop filter is set to false; otherwise, ctb_nnlf_luma_flag is set to true.

For chroma components (two chroma components, denoted as chroma1 and chroma2), in response to costCTUrec of a current chroma component being smaller than costCTUcnn of the current chroma component, a coding tree unit level usage flag (ctb_nnlf_chroma1_flag or ctb_nnlf_chroma2_flag) of the chroma component for the neural network-based in-loop filter is set to false; otherwise, ctb_nnlf_chroma1_flag or ctb_nnlf_chroma2_flag is set to true.

In response to all of the coding tree units in the current frame having been traversed, a rate-distortion cost (denoted as costCTUBest) is calculated based on reconstructed samples of the current frame in this case and original picture samples.

Each of the colour components is traversed, and in response to the value of costOrg being the smallest, a frame-level switch flag (first syntax element identifier information) for the neural network-based in-loop filter corresponding to the colour component is set for a first case (being a third value, i.e., 0), and is signalled into a bitstream. In response to the value of costFrameBest being the smallest, the frame-level switch flag (ph_nnlf_luma_ctrl_flag/ph_nnlf_chroma_ctrl_flag) for the neural network-based in-loop filter corresponding to the colour component is set for a second case (being a fourth value, i.e., 1), and is signalled into the bitstream. Further, quantization parameter indices (nnlf_luma_qp_index/nnlf_chroma1_qp_index/nnlf_chroma2_qp_index) of different colour components are signaled into the bitstream. In response to the value of costCTUBest being the smallest, the frame-level switch flag for the neural network-based in-loop filter corresponding to the colour component is set for a third case (being a fifth value, i.e., 2), and is signalled into the bitstream. Further, a coding unit-level usage flag for the neural network-based in-loop filter is signaled into the bitstream, and the quantization parameter indices (nnlf_luma_qp_index/nnlf_chroma1_qp_index/nnlf_chroma2_qp_index) of different colour components are signaled into the bitstream.

At operation 3, the encoder continues to attempt other in-loop filter tools and, upon completion, outputs a complete reconstructed picture.

Exemplarily, in a specific embodiment, a specific process for the decoding end is as follows.

The decoding end parses a sequence-level flag. In response to sps_nnlf_enable_flag being true, it indicates that a current bitstream is allowed to use the neural network model-based in-loop filter technology, and related syntax elements requires to be parsed during the subsequent decoding process; otherwise, it indicates that the current bitstream is not allowed to use the neural network model-based in-loop filter technology, and the related syntax elements does not require to be parsed during the subsequent decoding process, and herein the related syntax elements are defaulted to be initial values or in a false state.

At operation 1, the decoder parses a syntax element of the current frame, to obtain a neural network model-based frame-level switch flag (first syntax element identifier information). In response to the frame-level switch flag being not entirely for the first case, the decoder proceeds to operation 2; otherwise, the decoder skips operation 2 and proceeds to operation 3.

At operation 2, in response to the frame-level switch flag corresponding to the first case, it indicates that the neural network-based in-loop filter technology is not used for a current colour component, and all of the coding tree unit usage flags (ctb_nnlf_luma_flag/ctb_nnlf_chroma1_flag/ctb_nnlf_chroma2_flag) in the current frame are set to false. Then, the decoder continues to traverse other colour components.

In response to the frame-level switch flag corresponding to the second case, it indicates that all of the coding tree units for the current colour component are filtered by using the neural network-based in-loop filter technology, and coding tree unit level usage flags (ctb_nnlf_luma_flag/ctb_nnlf_chroma1_flag/ctb_nnlf_chroma2_flag) of all of the coding tree units of the current frame for the current colour component are automatically set to true.

In response to the frame-level switch flag corresponding to the second case, it indicates that there are some coding tree units for the current colour component that use the neural network-based in-loop filter technology and there are further some coding tree units that do not use the neural network-based in-loop filter technology. Therefore, in response to the frame-level switch flag corresponding to the third case, the coding tree unit level usage flags (ctb_nnlf_luma_flag/ctb_nnlf_chroma1_flag/ctb_nnlf_chroma2_flag) of all of the coding tree units of the current frame for the current colour component need to be further parsed.

In response to the frame-level switch flag (ph_nnlf_luma_ctrl_flag or ph_nnlf_chroma_ctrl_flag) corresponding to the second case or the third case, the decoder may parse a corresponding quantization parameter index (nnlf_luma_qp_index/nnlf_chroma1_qp_index/ nnlf chroma2 qp index) for a colour component from the bitstream. Based on the quantization parameter index, the decoder performs inference by using the neural network-based in-loop filter technology for the current frame or the current slice, to obtain filtered and reconstructed samples for different quantization parameters. The decoder determines whether to filter the current coding tree unit based on the coding tree unit-level usage flag. In response to filtering being required, based on the quantization parameter index of the current colour component, a corresponding filtered and reconstructed sample is obtained as an output sample of the current colour component of the coding tree unit. In response to no filtering being required, an original reconstructed sample is used as the output sample of the current colour component of the coding tree unit.

After traversing all of the coding tree units of the current frame or the current slice, the neural network-based in-loop filter module finishes its operation.

At operation 3, the decoding end continues to traverse other in-loop filter tools and, upon completion, outputs a complete reconstructed picture.

In yet another specific embodiment, a parsing process of the decoding end is briefly described in Table 1. Herein bold fonts indicate syntax elements that need to be parsed.

**Table 1**

| | |
|---|---|
| if (sps_nnlf_enable_flag) | |
| { | |
| **ph_nnlf_luma_ctrl_flag** | ae(v) |
| **ph_nnlf_chroma_ctrl_flag** | ae(v) |
| if (ph_nnlf_luma_ctrl_flag != 0) //not being the first case | |
| { | |
| **nnlf_luma_qp_index** | ae(v) |
| if (ph_nnlf_luma_ctrl_flag == 1){ //being the second case | |
| for (traverse all ctbs){ | |
| ctb_nnlf_luma_flag = 1 | |
| } | |
| } //if (ph_nnlf_luma_ctrl_flag == 1) | |
| else{ //being the third case | |
| for (traverse all ctbs){ | |
| **ctb_nnlf_luma_flag** //in the third case, parsing is required to obtain a coding unit level flag | ae(v) |
| } | |
| } | |
| } //*if* (ph_nnlf_luma_ctrl_flag != 0) | |
| else{ //blow for the first case | |
| for (traverse all ctbs){ | |
| ctb_nnlf_luma_flag = 0 | |
| } | |
| } //above for the first case | |
| if (ph_nnlf_chroma_ctrl_flag != 0) // not being the first case | |
| { | |
| **nnlf_chroma1_qp_index** | ae(v) |
| **nnlf_chroma2_qp_index** | ae(v) |
| if (ph_nnlf_chroma_ctrl_flag == 1){ // being the second case | |
| for (traverse all ctbs){ | |
| ctb_nnlf_chroma1_flag = 1 | |
| ctb_nnlf_chroma2_flag = 1 | |
| } | |
| } | |
| else { // being the third case | |
| for (traverse all ctbs){ | |
| **ctb_nnlf_chromal_flag** | ae(v) |
| **ctb_nnlf_chroma2_flag** | ae(v) |
| } | |
| } // if (ph_nnlf_chroma_ctrl_flag != 0) below for the first case | |
| else{ //below for the first case | |
| for (traverse all ctbs){ | |
| ctb_nnlf_chroma1_flag = 0 | |
| ctb_nnlf_chroma2_flag = 0 | |
| } | |
| } //above for the first case | |
| } //sps | |

In yet another embodiment of the disclosure, an embodiment of the disclosure provides a bitstream generated by performing bit-encoding based on information to-be-encoded. Herein the information to-be-encoded includes at least one of: at least one of quantization parameter information and a quantization parameter index, first syntax element identifier information of a component to-be-filtered of a current frame or a current slice, second syntax element identifier information of a component to-be-filtered of a current block, third syntax element identifier information of the current block included in the current frame or the current slice, fourth syntax element identifier information of a current video sequence, and a respective filtered and reconstructed value of each of partitioned blocks included in the current frame or the current slice. Herein the current block is one of the partitioned blocks.

In the embodiments of the disclosure, the specific implementation in the aforementioned embodiments has been described in detail through the above embodiments. According to the technical solutions in the aforementioned embodiments, it may be seen that the embodiments of the disclosure use different quantization parameters corresponding to different components to-be-filtered as inputs to improve coding performance, and introduce new syntax elements. In this way, while maintaining only one model, the selection of different quantization parameters is expanded, providing greater flexible selection and adaptability for luma components and chroma components. By performing rate-distortion optimization calculation at the encoding end, the decoding end may achieve more flexible configuration without needing to store multiple neural network models, thereby improving coding performance. Moreover, the technical solutions may further remove non-essential input elements such as predicted YUV information and YUV information with partition information, thereby reducing the computational load of inferences of the preset network model, which is beneficial for the implementation at the encoding end and the decoding end and for reducing the time for encoding and decoding.

In yet another embodiment of the disclosure, based on the same inventive concept as the aforementioned embodiments, referring to FIG. 11, which shows a schematic diagram of a composition structure of a decoder according to an embodiment of the disclosure. As illustrated in FIG. 11, a decoder 1 may include a parsing section 10, a first determining section 11, and a first filtering section 12.

The parsing section 10 is configured to parse a bitstream and determine first syntax element identifier information of a component to-be-filtered of a current block. Herein the first syntax element identifier information is used for determining whether each block in a current frame or a current slice is filtered based on a preset network model.

The first determining section 11 is configured to: in response to the first syntax element identifier information indicating that there are components to-be-filtered of partitioned blocks in the current frame or the current slice that are allowed to be filtered by using the preset network model, determine quantization parameter information of the component to-be-filtered, and determine second syntax element identifier information.

The first filtering section 12 is configured to filter the current block of the current frame or the current slice based on the second syntax element identifier information, the quantization parameter information, and the preset network model, to obtain a filtered and reconstructed value of the component to-be-filtered of the current block.

In some embodiments of the disclosure, the parsing section 10 is further configured to: in response to the first syntax element identifier information indicating that components to-be-filtered of all of the partitioned blocks in the current frame or the current slice are allowed to be filtered by using the preset network model, determine the quantization parameter information of the component to-be-filtered from the bitstream. The first determining section 11 is further configured to assigning a first value to the second syntax element identifier information.

In some embodiments of the disclosure, the parsing section 10 is further configured to: in response to the first syntax element identifier information indicating that there is a component to-be-filtered of at least one of the partitioned blocks in the current frame or the current slice that is allowed to be filtered by using the preset network model, determine the quantization parameter information of the component to-be-filtered from the bitstream, and determine the second syntax element identifier information from the bitstream. Herein the at least one of the partitioned blocks is part of the partitioned blocks in the current frame or the current slice.

In some embodiments of the disclosure, the first determining section 11 is further configured to: in response to the first syntax element identifier information indicating that the current frame or the current slice is not allowed to be filtered by using the preset network model, assign a second value to the second syntax element identifier information.

The first determining section 11 is further configured to: after determining a reconstructed value of the component to-be-filtered of the current block, determine the reconstructed value of the component to-be-filtered of the current block as the filtered and reconstructed value of the component to-be-filtered of the current block.

In some embodiments of the disclosure, the parsing section 10 is further configured to parse the bitstream to determine a reconstructed value of the component to-be-filtered of the current block.

In some embodiments of the disclosure, the first filtering section 12 is further configured to: in response to the second syntax element identifier information indicating that the component to-be-filtered of the current block is filtered by using the preset network model, input the reconstructed value of the component to-be-filtered and a quantization parameter corresponding to the quantization parameter index to the preset network model, and filter the current block of the current frame or the current slice to obtain the filtered and reconstructed value of the component to-be-filtered of the current block.

In some embodiments of the disclosure, the first determining section 11 is further configured to: in response to the first syntax element identifier information being a third value, determine the first syntax element identifier information indicating that the current frame or the current slice is not allowed to be filtered by using the preset network model.

The first determining section 11 is further configured to: in response to the first syntax element identifier information being a fourth value, determine the first syntax element identifier information indicating that components to-be-filtered of all of the partitioned blocks in the current frame or the current slice are allowed to be filtered by using the preset network model.

The first determining section 11 is further configured to: in response to the first syntax element identifier information being a fifth value, determine the first syntax element identifier information indicating that there is at least one of the partitioned blocks in the current frame or the current slice that is allowed to be filtered by using the preset network model.

In some embodiments of the disclosure, the parsing section 10 is further configured to parse the bitstream to determine a quantization parameter index of the component to-be-filtered of the current block; and determine, based on the quantization parameter index, the quantization parameter information of the component to-be-filtered for the current block from a quantization parameter candidate set.

In some embodiments of the disclosure, the parsing section 10 is further configured to parse the bitstream to determine the quantization parameter information of the component to-be-filtered for the current block.

In some embodiments of the disclosure, the first determining section 11 is further configured to: in response to the first syntax element identifier information indicating that there are the components to-be-filtered of the partitioned blocks in the current frame or the current slice that are allowed to be filtered by using the preset network model, and the current frame or the current slice being a first type frame, determine the quantization parameter information of the component to-be-filtered and the second syntax element identifier information.

In some embodiments of the disclosure, the parsing section 10 is further configured to determine third syntax element identifier information of the component to-be-filtered of the current block from the bitstream.

The first filtering section 12 is further configured to: in response to the first syntax element identifier information indicating that there are the components to-be-filtered of the partitioned blocks in the current frame or the current slice that are allowed to be filtered by using the preset network model, and the third syntax element identifier information indicating that the component to-be-filtered of the current block included in the current frame or the current slice is allowed to be filtered by using the preset network model, filter the current block of the current frame or the current slice based on the quantization parameter information and the preset network model, to obtain the filtered and reconstructed value of the component to-be-filtered of the current block.

Alternatively, the first filtering section 12 is further configured to: in response to the third syntax element identifier information indicating that the component to-be-filtered of a current block included in the current frame or the current slice is allowed to be filtered by using the preset network model, and the second syntax element identifier information indicating that the component to-be-filtered of the current block is filtered by using the preset network model, filter the current block of the current frame or the current slice based on the quantization parameter information and the preset network model, to obtain the filtered and reconstructed value of the component to-be-filtered of the current block.

In some embodiments of the disclosure, the parsing section 10 is further configured to: in response to the second syntax element identifier information indicating that the component to-be-filtered of the current block is not filtered by using the preset network model, not perform parsing of third syntax element identifier information.

In some embodiments of the disclosure, the first determining section 11 is further configured to obtain a reconstructed value of the component to-be-filtered of the current block and at least one of a prediction value of the component to-be-filtered of the current block, block partition information, and a deblocking filtering boundary strength.

The first filtering section 12 is further configured to filter the reconstructed value of the component to-be-filtered of the current block by using the preset network model and combining the quantization parameter information and at least one of the prediction value of the component to-be-filtered of the current block, the block partition information, and the deblocking filtering boundary strength, to obtain the filtered and reconstructed value of the component to-be-filtered of the current block.

In some embodiments of the disclosure, the first filtering section 12 is further configured to filter the current block of the current frame based on the second syntax element identifier information, the quantization parameter information, and the preset network model, to obtain first residual information of the component to-be-filtered of the current block.

The first filtering section 12 is further configured to: determine the filtered and reconstructed value of the component to-be-filtered of the current block based on the first residual information and a reconstructed value of the component to-be-filtered of the current block.

In some embodiments of the disclosure, the parsing section 10 is further configured to parse fourth syntax element identifier information before determining the first syntax element identifier information of the component to-be-filtered of the current block.

The parsing section 10 is further configured to: in response to the fourth syntax element identifier information indicating that a sequence including the current frame or the current slice is allowed to be filtered by using the preset network model, parse the first syntax element identifier information.

In some embodiments of the disclosure, the first determining section 11 is further configured to traverse each of the partitioned blocks in the current frame or the current slice, sequentially take each of the partitioned blocks as the current block, and repeatedly perform the operations of parsing the bitstream and determining the filtered and reconstructed value of the component to-be-filtered of the current block, to obtain a respective filtered and reconstructed value of each component to-be-filtered for each of the partitioned blocks.

The first determining section 11 is further configured to determine a reconstructed picture of the current frame or the current slice based on the respective filtered and reconstructed values of all of the components to-be-filtered for all of the partitioned blocks.

In some embodiments of the disclosure, the first determining section 11 is further configured to: traverse all components to-be-filtered of the current block; and repeatedly perform, for each of all components to-be-filtered sequentially, the operations of parsing the bitstream and determining the filtered and reconstructed value of the component to-be-filtered of the current block, to obtain a respective filtered and reconstructed value of each component to-be-filtered. Herein each component to-be-filtered corresponds to respective quantization parameter information.

The first determining section 11 is further configured to determine a filtered and reconstructed value of the current block based on the respective filtered and reconstructed values of all components to-be-filtered of the current block.

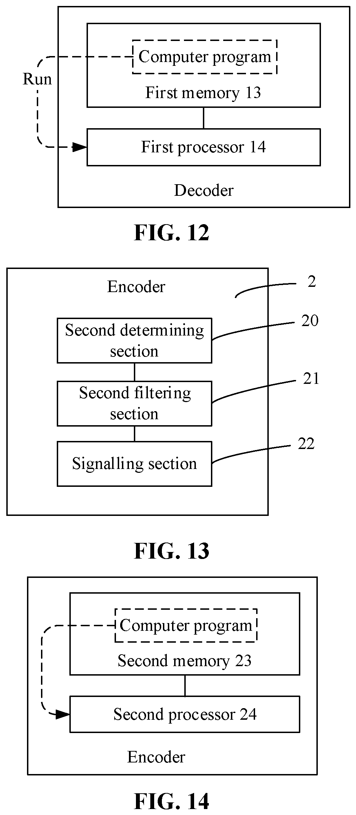

An embodiment of the disclosure further provides a decoder 1, as illustrated in FIG. 12, which may include a first memory 13 and a first processor 14.

The first memory 13 is configured to store a computer program capable of running on the first processor 14.

The first processor 14 is configured to execute, when running the computer program, the decoding method described for the decoder.

It may be understood that during the decoding process, the decoder may determine a filtered and reconstructed value of each of the components to-be-filtered based on quantization parameter information corresponding to each of the components to-be-filtered. That is to say, quantization parameter information (the optimal quantization parameter information for each of the components to-be-filtered obtained by the encoder through multiple model inferences during encoding) corresponding to different components to-be-filtered of the current frame or the current slice may be different, and may be filtered separately to obtain the filtered and reconstructed value of each of the components to-be-filtered. Therefore, each of the components to-be-filtered of the current block may use its own quantization parameter information to achieve filtering for each of the components to-be-filtered in the same preset network model. Therefore, the compression performance for each of the different components to-be-filtered is improved, and the selection of input information (the quantization parameter information) for filtering of the different components to-be-filtered is more flexible without increasing the complexity of the model, thereby improving the decoding efficiency.

**In** yet another embodiment of the disclosure, based on the same inventive concept as the aforementioned embodiments, referring to FIG. 13, which shows a schematic diagram of a composition structure of an encoder according to an embodiment of the disclosure. As illustrated in FIG. 13, an encoder 2 may include a second determining section 20 and a second filtering section 21.

The second determining section 20 is configured to determine a first rate-distortion cost of a current frame or a current slice. Herein the first rate-distortion cost is obtained in case that components to-be-filtered of all of partitioned blocks included in the current frame or the current slice are not filtered by using a preset network model.

The second filtering section 21 is configured to determine a second rate-distortion cost of the current frame or the current slice, herein the second rate-distortion cost is obtained in case that the components to-be-filtered of all of the partitioned blocks included in the current frame or the current slice are filtered by using the preset network model; and determine a third rate-distortion cost of the current frame or the current slice, herein the third rate-distortion cost is obtained in case that there is a component to-be-filtered of at least one of the partitioned blocks in the current frame that is allowed to be filtered by using the preset network model, and the at least one of the partitioned blocks is part of the partitioned blocks in the current frame or the current slice.

The second determining section 20 is further configured to determine, based on the first rate-distortion cost, the second rate-distortion cost, and the third rate-distortion cost, first syntax element identifier information of a component to-be-filtered of the current frame or the current slice.

In some embodiments of the disclosure, the second determining section 20 is further configured to: in response to obtained fourth syntax element identifier information indicating that a sequence including the current frame or the current slice is allowed to be filtered by using the preset network model, obtain a respective original value of each of the partitioned blocks, a respective reconstructed value of each of the partitioned blocks, and original quantization parameter information for the component to-be-filtered of the current frame or the current slice.

In some embodiments of the disclosure, the second determining section 20 is further configured to perform a rate-distortion cost calculation based on the original values of all of the partitioned blocks and the reconstructed values of all of the partitioned blocks, to determine the first rate-distortion cost of the current frame or the current slice.

In some embodiments of the disclosure, the second determining section 20 is further configured to determine at least two types of original quantization parameter information from the original quantization parameter information.

The second filtering section 21 is further configured to: for each type of the at least two types of original quantization parameter information, filter, based on the preset network model, the respective reconstructed value of the component to-be-filtered of each of the partitioned blocks included in the current frame or the current slice and the type of original quantization parameter information, to obtain a respective original filtered and reconstructed value of the component to-be-filtered of each of the partitioned blocks included in the current frame or the current slice.

The second determining section 20 is further configured to perform a rate-distortion cost calculation based on the original values of the components to-be-filtered of all of the partitioned blocks included in the current frame or the current slice and the original filtered and reconstructed values of the components to-be-filtered of all of the partitioned blocks, to obtain a fourth rate-distortion cost of a component to-be-filtered for each type of original quantization parameter information; determine, from at least two of the obtained fourth rate-distortion costs, a third minimum rate-distortion cost that has a lowest rate-distortion cost; and determine the second rate-distortion cost based on the respective third minimum rate-distortion costs of all components to-be-filtered.

In some embodiments of the disclosure, the second determining section 20 is further configured to: in response to obtaining the first rate-distortion cost, determine a first sub-rate-distortion cost of a component to-be-filtered for each of the partitioned blocks; in response to obtaining the second rate-distortion cost, determine a second sub-rate-distortion cost of a component to-be-filtered for each of the partitioned blocks; determine, based on the first sub-rate-distortion cost and the second sub-rate-distortion cost, a first minimum rate-distortion cost of the component to-be-filtered of the current frame or the current slice; and determine the third rate-distortion cost based on the first minimum rate-distortion costs of all of the components to-be-filtered.

In some embodiments of the disclosure, the second determining section 20 is further configured to traverse all of the components to-be-filtered, and determine a sum of the first minimum rate-distortion costs of all of the partitioned blocks as the third rate-distortion cost of the current frame or the current slice.

In some embodiments of the disclosure, the second determining section 20 is further configured to:
for one of the partitioned blocks: in response to the first sub-rate-distortion cost for the partitioned block being less than the second sub-rate-distortion cost for the partitioned block, determine that second syntax element identifier information of the component to-be-filtered of the partitioned block is to be a second value. Herein the second value indicates that the partitioned block is not allowed to be filtered by using the preset network model; and
for one of the partitioned blocks: in response to the first sub-rate-distortion cost for the partitioned block being greater than or equal to the second sub-rate-distortion cost for the partitioned block, determine that the second syntax element identifier information of the component to-be-filtered of the partitioned block is to be a first value. Herein the first value indicates that the partitioned block is allowed to be filtered by using the preset network model.

In some embodiments of the disclosure, the second determining section 20 is further configured to:
determine, from the first rate-distortion cost, the second rate-distortion cost, and the third rate-distortion cost, a second minimum rate-distortion cost that has a lowest rate-distortion cost;
in response to the second minimum rate-distortion cost being the first rate-distortion cost, determine that the first syntax element identifier information of the component to-be-filtered of the current frame or the current slice is to be a third value;
in response to the second minimum rate-distortion cost being the second rate-distortion cost, determine that the first syntax element identifier information of the component to-be-filtered of the current frame or the current slice is to be a fourth value; and
in response to the second minimum rate-distortion cost being the third rate-distortion cost, determine that the first syntax element identifier information of the component to-be-filtered of the current frame or the current slice is to be a fifth value.

In some embodiments of the disclosure, the encoder 2 further includes a signalling section 22.

The signalling section 22 is configured to: in response to determining that the first syntax element identifier information of the component to-be-filtered of the current frame or the current slice is to be a fifth value, signal respective second syntax element identifier information of each of the partitioned blocks into a bitstream.

In some embodiments of the disclosure, the encoder 2 further includes a signalling section 22 configured to: signal the first syntax element identifier information into a bitstream.

In some embodiments of the disclosure, the encoder 2 further includes a signalling section 22.

The second determining section 20 is further configured to: in response to a second minimum rate-distortion cost being the second rate-distortion cost or the third rate-distortion cost, determine a type of original quantization parameter information for the second rate-distortion cost or the third rate-distortion cost as quantization parameter information of the component to-be-filtered.

The signalling section 22 is configured to signal the quantization parameter information into a bitstream; or signal a quantization parameter index for the quantization parameter information into a bitstream.

In some embodiments of the disclosure, the second determining section 20 is further configured to: in response to obtained fourth syntax element identifier information indicating that a sequence including the current frame or the current slice is allowed to be filtered by using the preset network model, obtain a respective reconstructed value of each of the partitioned blocks and original quantization parameter information for the component to-be-filtered of the current frame or the current slice, and obtain at least one of: a respective prediction value of each of the partitioned blocks for the component to-be-filtered of the current frame or the current slice, block partition information, and a deblocking filtering boundary strength; and determine at least two types of original quantization parameter information from the original quantization parameter information.

The second filtering section 21 is further configured to: for each type of the at least two types of original quantization parameter information, input the respective reconstructed values of all of the partitioned blocks, the type of original quantization parameter information, and at least one of the respective prediction values of all of the partitioned blocks, the block partition information, and the deblocking filtering boundary strength into the preset network model for filtering, to obtain a respective original filtered and reconstructed value of each of the partitioned blocks for the component to-be-filtered.

The second determining section 20 is further configured to: perform a rate-distortion cost calculation based on original values of the components to-be-filtered of all of the partitioned blocks included in the current frame and the original filtered and reconstructed values of the components to-be-filtered of all of the partitioned blocks, to obtain a fourth rate-distortion cost of the component to-be-filtered for each type of original quantization parameter information; determine, from the obtained at least two of the fourth rate-distortion costs, a third minimum rate-distortion cost that has a lowest rate-distortion cost; and determine the second rate-distortion cost based on the third minimum rate-distortion costs of all of the components to-be-filtered.

In some embodiments of the disclosure, the encoder 2 further includes a signalling section 22.

The second determining section 20 is further configured to: in response to a second minimum rate-distortion cost being the second rate-distortion cost or the third rate-distortion cost, determine a respective original filtered and reconstructed value of each of the partitioned blocks for the second rate-distortion cost or the third rate-distortion cost as a filtered and reconstructed value of a component to-be-filtered of the partitioned block.

The signalling section 22 is configured to signal the filtered and reconstructed values into a bitstream.

In some embodiments of the disclosure, the encoder 2 further includes a signalling section 22.

The second determining section 20 is further configured to determine fourth syntax element identifier information.

The second determining section 20 is further configured to: in response to the fourth syntax element identifier information indicating that a sequence including the current frame or the current slice is allowed to be filtered by using the preset network model, and the current frame or the current slice being a first type frame, determine the first rate-distortion cost, the second rate-distortion cost, and the third rate-distortion cost which are used in the encoding method.

The signalling section 22 is configured to signal the fourth syntax element identifier information into a bitstream.

In some embodiments of the disclosure, the encoder 2 further includes a signalling section 22.

The second determining section 20 is further configured to determine third syntax element identifier information. Herein the third syntax element identifier information indicates that a component to-be-filtered of a current block is allowed to be filtered by using the preset network model.

The signalling section 22 is configured to signal the third syntax element identifier information into a bitstream.

An embodiment of the disclosure provides an encoder 2, as illustrated in FIG. 14, which may include a second memory 23 and a second processor 24.

The second memory 23 is configured to store a computer program capable of running on the second processor 24.

The second processor 24 is configured to execute, when running the computer program, the encoding method described for the encoder.

It may be understood that during the encoding process, the encoder determines an encoding approach with a lowest frame-level rate-distortion cost or a lowest slice-level rate-distortion cost through multiple model inferences, considering cases that none of the partitioned blocks are filtered, all of the partitioned blocks are filtered, and part of the partitioned blocks is filtered. Quantization parameter information corresponding to each of the components to-be-filtered may be different types of quantization parameter information in different cases. That is to say, quantization parameter information (the optimal quantization parameter information of each of the components to-be-filtered obtained by the encoder through multiple model inferences during encoding) corresponding to different components to-be-filtered of the current frame or the current slice may be different, and may be filtered separately to obtain a filtered and reconstructed value of each of the components to-be-filtered. Therefore, for each of the components to-be-filtered of the current block, its own quantization parameter information may be used to perform filtering on the component to-be-filtered in the same preset network model. Therefore, the compression performance for each of the components to-be-filtered is improved, and the selection of input information (the quantization parameter information) for filtering of different components to-be-filtered is more flexible without increasing the complexity of the model, thereby improving the encoding efficiency.

An embodiment of the disclosure provides a computer-readable storage medium having stored thereon a computer program that: when executed by a first processor, implements the decoding method described for the decoder; or when executed by a second processor, implements the encoding method described for the encoder.

In the embodiments of the disclosure, the various components may be integrated into one processing unit, or each unit may exist separately physically, or two or more units may be integrated into one unit. The integrated units mentioned above may be implemented in the form of hardware or software functional modules.

If the integrated unit is implemented in the form of software functional modules and not sold or used as an independent product, it may be stored in a computer-readable storage medium. Based on this understanding, the technical solutions in the embodiments, in essence or the part that contributes to the related art or all or part of the technical solutions may be embodied in the form of a software product. The computer software product is stored in a storage medium and includes several instructions to make a computer device (which may be a personal computer, a server, or a network device, etc.) or a processor to execute all or part of the operations of the method described in the embodiments. The aforementioned computer-readable storage medium includes various media that may store program codes, such as a ferromagnetic random access memory (FRAM), a read only memory (ROM), a programmable read-only memory (PROM), an erasable PROM (EPROM), an electrically EPROM (EEPROM), a flash memory, a magnetic surface memory, an optical disc, or a compact disc read-only memory (CD-ROM), which is not limited in the embodiments of the disclosure.

The above descriptions are merely implementations of the disclosure, but the scope of protection of the disclosure is not limited to thereto. Any person skilled in the art may easily conceive changes or replacements within the technical scope disclosed in the disclosure, all of which should be included in the scope of protection of the disclosure. Therefore, the scope of protection of the disclosure should be subject to the scope of protection of the claims.

### Industrial applicability

The embodiments of the disclosure provide encoding and decoding methods, an encoder, a decoder, a bitstream, and a storage medium. In the decoder, first syntax element identifier information of a component to-be-filtered of a current frame or a current slice is determined by parsing a bitstream, herein the first syntax element identifier information is used for determining whether a component to-be-filtered of each block in the current frame or the current slice is filtered based on a preset network model. In response to the first syntax element identifier information indicating that there are components to-be-filtered of partitioned blocks in the current frame or the current slice that are allowed to be filtered by using the preset network model, quantization parameter information of a component to-be-filtered is determined, and second syntax element identifier information is determined. Based on the second syntax element identifier information, the quantization parameter information, and the preset network model, a current block of the current frame or the current slice is filtered, to obtain a filtered and reconstructed value of the component to-be-filtered of the current block. In the encoder, a first rate-distortion cost of a current frame or a current slice is determined; herein the first rate-distortion cost is obtained in case that components to-be-filtered of all of partitioned blocks included in the current frame or the current slice are not filtered by using a preset network model. A second rate-distortion cost of the current frame or the current slice is determined; herein the second rate-distortion cost is obtained in case that the components to-be-filtered of all of the partitioned blocks included in the current frame or the current slice are filtered by using the preset network model. A third rate-distortion cost of the current frame or the current slice is determined; herein the third rate-distortion cost is obtained in case that there is a component to-be-filtered of at least one of the partitioned blocks in the current frame or the current slice that is allowed to be filtered by using the preset network model, and the at least one of the partitioned blocks is part of the partitioned blocks in the current frame or the current slice. Based on the first rate-distortion cost, the second rate-distortion cost, and the third rate-distortion cost, first syntax element identifier information of a component to-be-filtered of the current frame or the current slice is determined.

The disclosure determines a coding approach with a lowest frame-level rate-distortion cost or a lowest slice-level rate-distortion cost through multiple model inferences, considering cases that none of the partitioned blocks are filtered, all of the partitioned blocks are filtered, and part of the partitioned blocks is filtered. Quantization parameter information corresponding to each of the components to-be-filtered may be different types of quantization parameter information in different cases. That is to say, quantization parameter information (the optimal quantization parameter information of each of the components to-be-filtered obtained by the encoder through multiple model inferences during encoding) corresponding to different components to-be-filtered of the current frame or the current slice may be different, and may be filtered separately to obtain a filtered and reconstructed value of each of the components to-be-filtered. Therefore, each of the components to-be-filtered of the current block may use its own quantization parameter information to perform filtering on the component to-be-filtered in the same preset network model. Therefore, the compression performance for each of the components to-be-filtered is improved, and the selection of input information (the quantization parameter information) for filtering of different components to-be-filtered is more flexible without increasing the complexity of the model, thereby improving the efficiency of encoding and decoding.

## Claims

1. A decoding method, applied to a decoder, and comprising:
parsing a bitstream, and determining first syntax element identifier information of a component to-be-filtered of a current frame or a current slice, wherein the first syntax element identifier information is used for determining whether a component to-be-filtered of each block in the current frame or the current slice is filtered based on a preset network model;
in response to the first syntax element identifier information indicating that there are components to-be-filtered of partitioned blocks in the current frame or the current slice that are allowed to be filtered by using the preset network model, determining quantization parameter information of a component to-be-filtered, and determining second syntax element identifier information; and
filtering, based on the second syntax element identifier information, the quantization parameter information and the preset network model, a current block of the current frame or the current slice, to obtain a filtered and reconstructed value of the component to-be-filtered of the current block.

2. The method of claim 1, wherein in response to the first syntax element identifier information indicating that there are the components to-be-filtered of the partitioned blocks in the current frame or the current slice that are allowed to be filtered by using the preset network model, determining the quantization parameter information of the component to-be-filtered, and determining the second syntax element identifier information comprises:
in response to the first syntax element identifier information indicating that components to-be-filtered of all of the partitioned blocks in the current frame or the current slice are allowed to be filtered by using the preset network model, determining the quantization parameter information of the component to-be-filtered from the bitstream, and assigning a first value to the second syntax element identifier information.

3. The method of claim 1, wherein in response to the first syntax element identifier information indicating that there are the components to-be-filtered of the partitioned blocks in the current frame or the current slice that are allowed to be filtered by using the preset network model, determining the quantization parameter information of the component to-be-filtered, and determining the second syntax element identifier information comprises:
in response to the first syntax element identifier information indicating that there is a component to-be-filtered of at least one of the partitioned blocks in the current frame or the current slice that is allowed to be filtered by using the preset network model, determining the quantization parameter information of the component to-be-filtered from the bitstream, and determining the second syntax element identifier information from the bitstream; wherein the at least one of the partitioned blocks is part of the partitioned blocks in the current frame or the current slice.

4. The method of claim 1, further comprising:
in response to the first syntax element identifier information indicating that the current frame or the current slice is not allowed to be filtered by using the preset network model, assigning a second value to the second syntax element identifier information; and
after determining a reconstructed value of the component to-be-filtered of the current block, determining the reconstructed value of the component to-be-filtered of the current block as the filtered and reconstructed value of the component to-be-filtered of the current block.

5. The method of claim 1, further comprising:
parsing the bitstream to determine a reconstructed value of the component to-be-filtered of the current block.

6. The method of claim 5, wherein filtering, based on the second syntax element identifier information, a quantization parameter index, and the preset network model, the current block of the current frame or the current slice, to obtain the filtered and reconstructed value of the component to-be-filtered of the current block comprises:
in response to the second syntax element identifier information indicating that the component to-be-filtered of the current block is filtered by using the preset network model, inputting the reconstructed value of the component to-be-filtered and a quantization parameter corresponding to the quantization parameter index to the preset network model, and filtering the current block of the current frame or the current slice to obtain the filtered and reconstructed value of the component to-be-filtered of the current block.

7. The method of claim 1, wherein determining the first syntax element identifier information of the component to-be-filtered of the current frame or the current slice comprises:
in response to the first syntax element identifier information being a third value, determining the first syntax element identifier information indicating that the current frame or the current slice is not allowed to be filtered by using the preset network model;
in response to the first syntax element identifier information being a fourth value, determining the first syntax element identifier information indicating that components to-be-filtered of all of the partitioned blocks in the current frame or the current slice are allowed to be filtered by using the preset network model; and
in response to the first syntax element identifier information being a fifth value, determining the first syntax element identifier information indicating that there is at least one of the partitioned blocks in the current frame or the current slice that is allowed to be filtered by using the preset network model.

8. The method of claim 1, wherein determining the quantization parameter information of the component to-be-filtered comprises:
parsing the bitstream to determine a quantization parameter index of the component to-be-filtered of the current block; and
determining, based on the quantization parameter index, the quantization parameter information of the component to-be-filtered for the current block from a quantization parameter candidate set.

9. The method of claim 1, wherein determining the quantization parameter information of the component to-be-filtered comprises:
parsing the bitstream to determine the quantization parameter information of the component to-be-filtered for the current block.

10. The method of claim 1, further comprising:
in response to the first syntax element identifier information indicating that there are the components to-be-filtered of the partitioned blocks in the current frame or the current slice that are allowed to be filtered by using the preset network model, and the current frame or the current slice being a first type frame, determining the quantization parameter information of the component to-be-filtered and the second syntax element identifier information.

11. The method of claim 1, further comprising:
determining third syntax element identifier information of the component to-be-filtered of the current block from the bitstream;
in response to the first syntax element identifier information indicating that there are the components to-be-filtered of the partitioned blocks in the current frame or the current slice that are allowed to be filtered by using the preset network model, and the third syntax element identifier information indicating that the component to-be-filtered of the current block comprised in the current frame or the current slice is allowed to be filtered by using the preset network model, filtering, based on the quantization parameter information and the preset network model, the current block of the current frame or the current slice to obtain the filtered and reconstructed value of the component to-be-filtered of the current block; or
in response to the third syntax element identifier information indicating that the component to-be-filtered of the current block comprised in the current frame or the current slice is allowed to be filtered by using the preset network model, and the second syntax element identifier information indicating that the component to-be-filtered of the current block is filtered by using the preset network model, filtering, based on the quantization parameter information and the preset network model, the current block of the current frame or the current slice to obtain the filtered and reconstructed value of the component to-be-filtered of the current block.

12. The method of claim 1, further comprising:
in response to the second syntax element identifier information indicating that the component to-be-filtered of the current block is not filtered by using the preset network model, not performing parsing of third syntax element identifier information.

13. The method of any one of claims 1 to 3 and 7 to 10, wherein before filtering, based on the second syntax element identifier information, a quantization parameter index, and the preset network model, the current block of the current frame or the current slice, to obtain the filtered and reconstructed value of the component to-be-filtered of the current block, the method further comprises:
obtaining a reconstructed value of the component to-be-filtered of the current block and at least one of a prediction value of the component to-be-filtered of the current block, block partition information, and a deblocking filtering boundary strength;
wherein filtering, based on the second syntax element identifier information, the quantization parameter index, and the preset network model, the current block of the current frame or the current slice, to obtain the filtered and reconstructed value of the component to-be-filtered of the current block comprises
filtering, using the preset network model and combining the quantization parameter information and at least one of the prediction value of the component to-be-filtered of the current block, the block partition information, and the deblocking filtering boundary strength, the reconstructed value of the component to-be-filtered of the current block to obtain the filtered and reconstructed value of the component to-be-filtered of the current block.

14. The method of any one of claims 1 to 3 and 7 to 10, wherein filtering, based on the second syntax element identifier information, a quantization parameter index, and the preset network model, the current block of the current frame, to obtain the filtered and reconstructed value of the component to-be-filtered of the current block comprises:
filtering, based on the second syntax element identifier information, the quantization parameter information, and the preset network model, the current block of the current frame, to obtain first residual information of the component to-be-filtered of the current block; and
determining, based on the first residual information and a reconstructed value of the component to-be-filtered of the current block, the filtered and reconstructed value of the component to-be-filtered of the current block.

15. The method of claim 1, wherein before determining the first syntax element identifier information of the component to-be-filtered of the current block, the method further comprises:
parsing fourth syntax element identifier information; and
in response to the fourth syntax element identifier information indicating that a sequence comprising the current frame or the current slice is allowed to be filtered by using the preset network model, parsing the first syntax element identifier information.

16. The method of any one of claims 1 to 12 and 15, further comprising:
traversing each of the partitioned blocks in the current frame or the current slice, sequentially taking each of the partitioned blocks as the current block, and repeatedly performing the operations of parsing the bitstream and determining the filtered and reconstructed value of the component to-be-filtered of the current block, to obtain a respective filtered and reconstructed value of each component to-be-filtered for each of the partitioned blocks; and
determining a reconstructed picture of the current frame or the current slice based on the respective filtered and reconstructed values of all of the components to-be-filtered for all of the partitioned blocks.

17. The method of claim 1, further comprising:
traversing all components to-be-filtered of the current block, and repeatedly performing, for each of all components to-be-filtered sequentially, the operations of parsing the bitstream and determining the filtered and reconstructed value of the component to-be-filtered of the current block, to obtain a respective filtered and reconstructed value of each component to-be-filtered; wherein each component to-be-filtered corresponds to respective quantization parameter information; and
determining a filtered and reconstructed value of the current block based on the respective filtered and reconstructed values of all components to-be-filtered of the current block.

18. An encoding method, applied to an encoder, and comprising:
determining a first rate-distortion cost of a current frame or a current slice; wherein the first rate-distortion cost is obtained in case that components to-be-filtered of all of partitioned blocks comprised in the current frame or the current slice are not filtered by using a preset network model;
determining a second rate-distortion cost of the current frame or the current slice; wherein the second rate-distortion cost is obtained in case that the components to-be-filtered of all of the partitioned blocks comprised in the current frame or the current slice are filtered by using the preset network model;
determining a third rate-distortion cost of the current frame or the current slice; wherein the third rate-distortion cost is obtained in case that there is a component to-be-filtered of at least one of the partitioned blocks in the current frame or the current slice that is allowed to be filtered by using the preset network model, and the at least one of the partitioned blocks is part of the partitioned blocks in the current frame or the current slice; and
determining, based on the first rate-distortion cost, the second rate-distortion cost and the third rate-distortion cost, first syntax element identifier information of a component to-be-filtered of the current frame or the current slice.

19. The method of claim 18, further comprising:
in response to obtained fourth syntax element identifier information indicating that a sequence comprising the current frame or the current slice is allowed to be filtered by using the preset network model, obtaining a respective original value of each of the partitioned blocks, a respective reconstructed value of each of the partitioned blocks, and original quantization parameter information for the component to-be-filtered of the current frame or the current slice.

20. The method of claim 19, wherein determining the first rate-distortion cost of the current frame or the current slice comprises:
performing a rate-distortion cost calculation based on the original values of all of the partitioned blocks and the reconstructed values of all of the partitioned blocks, to determine the first rate-distortion cost of the current frame or the current slice.

21. The method of claim 19, wherein determining the second rate-distortion cost of the current frame or the current slice comprises:
determining at least two types of original quantization parameter information from the original quantization parameter information;
for each type of the at least two types of original quantization parameter information, filtering, based on the preset network model, the respective reconstructed value of the component to-be-filtered of each of the partitioned blocks comprised in the current frame or the current slice and the type of original quantization parameter information, to obtain a respective original filtered and reconstructed value of the component to-be-filtered of each of the partitioned blocks comprised in the current frame or the current slice;
performing a rate-distortion cost calculation based on the original values of the components to-be-filtered of all of the partitioned blocks comprised in the current frame or the current slice and the original filtered and reconstructed values of the components to-be-filtered of all of the partitioned blocks, to obtain a fourth rate-distortion cost of a component to-be-filtered for each type of original quantization parameter information;
determining, from at least two of the obtained fourth rate-distortion costs, a third minimum rate-distortion cost that has a lowest rate-distortion cost; and
determining the second rate-distortion cost based on the respective third minimum rate-distortion costs of all components to-be-filtered.

22. The method of claim 18, wherein determining the third rate-distortion cost of the current frame or the current slice comprises:
in response to obtaining the first rate-distortion cost, determining a first sub-rate-distortion cost of the component to-be-filtered for each of the partitioned blocks;
in response to obtaining the second rate-distortion cost, determining a second sub-rate-distortion cost of the component to-be-filtered for each of the partitioned blocks;
determining, based on the first sub-rate-distortion cost and the second sub-rate-distortion cost, a first minimum rate-distortion cost of the component to-be-filtered of the current frame or the current slice; and
determining the third rate-distortion cost based on the first minimum rate-distortion costs of all of the components to-be-filtered.

23. The method of claim 22, wherein determining the third rate-distortion cost of the current frame or the current slice based on the first minimum rate-distortion costs of all of the components to-be-filtered comprises:
traversing all of the components to-be-filtered, and determining a sum of the first minimum rate-distortion costs of all of the partitioned blocks as the third rate-distortion cost of the current frame or the current slice.

24. The method of claim 22 or 23, further comprising:
for one of the partitioned blocks: in response to the first sub-rate-distortion cost for the partitioned block being less than the second sub-rate-distortion cost for the partitioned block, determining that second syntax element identifier information of the component to-be-filtered of the partitioned block is to be a second value; wherein the second value indicates that the partitioned block is not allowed to be filtered by using the preset network model; and
for one of the partitioned blocks: in response to the first sub-rate-distortion cost for the partitioned block being greater than or equal to the second sub-rate-distortion cost for the partitioned block, determining that the second syntax element identifier information of the component to-be-filtered of the partitioned block is to be a first value; wherein the first value indicates that the partitioned block is allowed to be filtered by using the preset network model.

25. The method of claim 18, wherein determining, based on the first rate-distortion cost, the second rate-distortion cost, and the third rate-distortion cost, the first syntax element identifier information of the component to-be-filtered of the current frame or the current slice comprises:
determining, from the first rate-distortion cost, the second rate-distortion cost, and the third rate-distortion cost, a second minimum rate-distortion cost that has a lowest rate-distortion cost;
in response to the second minimum rate-distortion cost being the first rate-distortion cost, determining that the first syntax element identifier information of the component to-be-filtered of the current frame or the current slice is to be a third value;
in response to the second minimum rate-distortion cost being the second rate-distortion cost, determining that the first syntax element identifier information of the component to-be-filtered of the current frame or the current slice is to be a fourth value; and
in response to the second minimum rate-distortion cost being the third rate-distortion cost, determining that the first syntax element identifier information of the component to-be-filtered of the current frame or the current slice is to be a fifth value.

26. The method of claim 18, further comprising:
in response to determining that the first syntax element identifier information of the component to-be-filtered of the current frame or the current slice is to be a fifth value, signalling respective second syntax element identifier information of each of the partitioned blocks into a bitstream.

27. The method of claim 18, further comprising:
signalling the first syntax element identifier information into a bitstream.

28. The method of claim 18 or 25, further comprising:
in response to a second minimum rate-distortion cost being the second rate-distortion cost or the third rate-distortion cost, determining a type of original quantization parameter information for the second rate-distortion cost or the third rate-distortion cost as quantization parameter information of the component to-be-filtered, and signalling the quantization parameter information into a bitstream; or signalling a quantization parameter index for the quantization parameter information into a bitstream.

29. The method of claim 18, wherein determining the second rate-distortion cost of the component to-be-filtered of the current frame or the current slice comprises:
in response to obtained fourth syntax element identifier information indicating that a sequence comprising the current frame or the current slice is allowed to be filtered by using the preset network model, obtaining a respective reconstructed value of each of the partitioned blocks and original quantization parameter information for the component to-be-filtered of the current frame or the current slice, and obtaining at least one of: a respective prediction value of each of the partitioned blocks for the component to-be-filtered of the current frame or the current slice, block partition information, and a deblocking filtering boundary strength;
determining at least two types of original quantization parameter information from the original quantization parameter information;
for each type of the at least two types of original quantization parameter information, inputting the respective reconstructed values of all of the partitioned blocks, the type of original quantization parameter information, and at least one of the respective prediction values of all of the partitioned blocks, the block partition information, and the deblocking filtering boundary strength into the preset network model for filtering, to obtain a respective original filtered and reconstructed value of each of the partitioned blocks for the component to-be-filtered;
performing a rate-distortion cost calculation based on original values of the components to-be-filtered of all of the partitioned blocks comprised in the current frame and the original filtered and reconstructed values of the components to-be-filtered of all of the partitioned blocks, to obtain a fourth rate-distortion cost of the component to-be-filtered for each type of original quantization parameter information;
determining, from the obtained at least two of the fourth rate-distortion costs, a third minimum rate-distortion cost that has a lowest rate-distortion cost; and
determining the second rate-distortion cost based on the third minimum rate-distortion costs of all of the components to-be-filtered.

30. The method of claim 18, further comprising:
in response to a second minimum rate-distortion cost being the second rate-distortion cost or the third rate-distortion cost, determining a respective original filtered and reconstructed value of each of the partitioned blocks for the second rate-distortion cost or the third rate-distortion cost as a filtered and reconstructed value of a component to-be-filtered of the partitioned block, and signalling the filtered and reconstructed value into a bitstream.

31. The method of claim 18, further comprising:
determining fourth syntax element identifier information; and signalling the fourth syntax element identifier information into a bitstream; and
in response to the fourth syntax element identifier information indicating that a sequence comprising the current frame or the current slice is allowed to be filtered by using the preset network model, and the current frame or the current slice being a first type frame, determining the first rate-distortion cost, the second rate-distortion cost, and the third rate-distortion cost which are used in the encoding method.

32. The method of claim 18, further comprising:
determining third syntax element identifier information; wherein the third syntax element identifier information indicates that a component to-be-filtered of a current block is allowed to be filtered by using the preset network model; and
signalling the third syntax element identifier information into a bitstream.

33. A decoder, comprising:
a parsing section, configured to parse a bitstream and determine first syntax element identifier information of a component to-be-filtered of a current block, wherein the first syntax element identifier information is used for determining whether each block in a current frame or a current slice is filtered based on a preset network model;
a first determining section, configured to: in response to the first syntax element identifier information indicating that there are components to-be-filtered of partitioned blocks in the current frame or the current slice that are allowed to be filtered by using the preset network model, determine quantization parameter information of a component to-be-filtered, and determine second syntax element identifier information; and
a first filtering section, configured to filter, based on the second syntax element identifier information, the quantization parameter information and the preset network model, the current block of the current frame or the current slice, to obtain a filtered and reconstructed value of the component to-be-filtered of the current block.

34. An encoder, comprising:
a second determining section, configured to determine a first rate-distortion cost of a current frame or a current slice; wherein the first rate-distortion cost is obtained in case that components to-be-filtered of all of partitioned blocks comprised in the current frame or the current slice are not filtered by using a preset network model; and
a second filtering section, configured to determine a second rate-distortion cost of the current frame or the current slice, wherein the second rate-distortion cost is obtained in case that the components to-be-filtered of all of the partitioned blocks comprised in the current frame or the current slice are filtered by using the preset network model; and determine a third rate-distortion cost of the current frame or the current slice, wherein the third rate-distortion cost is obtained in case that there is a component to-be-filtered of at least one of the partitioned blocks in the current frame that is allowed to be filtered by using the preset network model, and the at least one of the partitioned blocks is part of the partitioned blocks in the current frame or the current slice;
wherein the second determining section is further configured to determine, based on the first rate-distortion cost, the second rate-distortion cost and the third rate-distortion cost, first syntax element identifier information of a component to-be-filtered of the current frame or the current slice.

35. A decoder, comprising:
a first memory, configured to store a computer program capable of running on a first processor; and
the first processor, configured to execute, when running the computer program, the method of any one of claims 1 to 17.

36. An encoder, comprising:
a second memory, configured to store a computer program capable of running on a second processor; and
the second processor, configured to execute, when running the computer program, the method of any one of claims 18 to 32.

37. A computer-readable storage medium having stored thereon a computer program that: when executed by a first processor, implements the method of any one of claims 1 to 17; or when executed by a second processor, implements the method of any one of claims 18 to 32.

38. A bitstream, generated by performing bit-encoding based on information to-be-encoded; wherein the information to-be-encoded comprises at least one of: at least one of quantization parameter information and a quantization parameter index, first syntax element identifier information of a component to-be-filtered of a current frame or a current slice, second syntax element identifier information of a component to-be-filtered of a current block, third syntax element identifier information of the current block comprised in the current frame or the current slice, fourth syntax element identifier information of a current video sequence, and a respective filtered and reconstructed value of each of partitioned blocks comprised in the current frame or the current slice; and wherein the current block is one of the partitioned blocks.
